# EUROPEAN PATENT SPECIFICATION

(11) **EP 1 188 570 B1**
(45) Date of publication and mention of the grant of the patent: **09.05.2007**
(21) Application number: 01121668.6
(22) Date of filing: 13.09.2001
(51) Int. Cl.: B41M 3/12, B41M 5/025, B41M 5/035

(54) **Intermediate transfer recording medium and method for image formation**
Zwischenmedium für Übertragungsaufzeichnungsverfahren und Bebilderungsverfahren
Medium intermédiaire pour le marquage par transfert, et procédé de formation d'image

(30) Priority: 14.09.2000 JP 2000279135; 19.12.2000 JP 2000386026; 16.03.2001 JP 2001077085; 16.04.2001 JP 2001116713
(43) Date of publication of application: 20.03.2002
(73) Proprietor: DAI NIPPON PRINTING CO., LTD., Tokyo 162-01 (JP)
(72) Inventor: Kita, Tatsuya, Dai Nippon Printing Co., Ltd., Tokyo-to (JP); Saito, Hitoshi, Dai Nippon Printing Co., Ltd., Tokyo-to (JP); Oshima, Katsuyuki, Dai Nippon Printing Co., Ltd., Tokyo-to (JP); Kometani, Shinji, Dai Nippon Printing Co., Ltd., Tokyo-to (JP); Yamazaki, Masayasu, Dai Nippon Printing Co., Ltd., Tokyo-to (JP); Odamura, Kouzou, Dai Nippon Printing Co., Ltd., Tokyo-to (JP); Imai, Takayuki, Dai Nippon Printing Co., Ltd., Tokyo-to (JP); Ishida Tadahiro, Dai Nippon Printing Co., Ltd., Tokyo-to (JP); Takasaki, Etsuo, Dai Nippon Printing Co., Ltd., Tokyo-to (JP)
(74) Representative: Müller-Boré & Partner Patentanwälte

(56) References cited:
- EP-A- 0 535 718
- EP-A- 0 943 462
- EP-A- 0 980 767
- US-A- 5 707 925
- PATENT ABSTRACTS OF JAPAN vol. 2000, no. 12, 3 January 2001 (2001-01-03) -& JP 2000 238439 A (DAINIPPON PRINTING CO LTD), 5 September 2000 (2000-09-05)
- PATENT ABSTRACTS OF JAPAN vol. 1995, no. 10, 30 November 1995 (1995-11-30) & JP 07 186515 A (TOPPAN PRINTING CO LTD), 25 July 1995 (1995-07-25)

## Description

The present invention relates to an intermediate transfer recording medium, which can be used to form an image on an object, can form a protective layer on the image to impart fastness properties to the image, and permits the protective layer to be transferred onto the image with high accuracy in a simple manner.

Various thermal transfer methods have hitherto been known in the art. In these thermal transfer methods, a thermal transfer sheet comprising a color transfer layer provided on a substrate sheet is image-wise heated from its backside, for example, by means of a thermal head to thermally transfer the color transfer layer onto the surface of a thermal transfer image-receiving sheet, thereby forming an image.

The thermal transfer methods are roughly classified according to the construction of the color transfer layer into two methods, i.e., sublimation dye thermal transfer (sublimation-type thermal transfer) and thermal ink transfer (hot melt-type thermal transfer). For both the methods, full-color images can be formed. For example, a thermal transfer sheet comprising colorant layers of three colors of yellow, magenta, and cyan or optionally four colors of yellow, magenta, cyan, and black is provided, and images of the individual colors are thermally transferred in a superimposition manner on the surface of an identical thermal transfer image-receiving sheet to form a full-color image.

The development of various hardwares and softwares associated with multimedia has led to the expansion of the market of the thermal transfer method as a full-color hard copy system for computer graphics, static images through satellite communication, digital images typified, for example, by images of CD-ROMs (compact disc read only memory), and analog images, such as video images.

Specific applications of the thermal transfer image-receiving sheet used in the thermal transfer method are various, and representative examples thereof include proofs of printing, output of images, output of plans and designs, for example, in CAD/CAM, output of various medical analytical instruments and measuring instruments, such as CT scans and endoscope cameras, alternative to instant photographs, output and printing of photograph-like images of a face or the like onto identification cards or ID cards, credit cards, and other cards, and composite photographs and commemorative photographs, for example, in amusement facilities, such as amusement parks, game centers (amusement arcades), museums, and aquaria.

The diversification of the applications has lead to an increasing demand for the formation of a thermally transferred image on a desired object. One method proposed for meeting this demand comprises the steps: providing an intermediate transfer recording medium comprising a substrate and a receptive layer separably provided on the substrate; providing a thermal transfer sheet having a dye layer; transferring the dye from the thermal transfer sheet to the receptive layer in the intermediate transfer recording medium to form an image on the receptive layer; and then heating the intermediate transfer recording medium to transfer the receptive layer onto an object (see Japanese Patent Laid-Open No. 238791/1987).

Sublimation transfer-type thermal transfer sheets can faithfully form gradational images, such as photograph-like images of a face. Unlike conventional images produced by printing inks, however, these images disadvantageously lack in fastness properties, such as weathering resistance, abrasion resistance, and chemical resistance.

To solve this problem, a method has been proposed wherein a protective layer thermal transfer film having a thermally transferable resin layer is put on top of a thermally transferred image and the transparent thermally transferable resin layer is transferred, for example, by means of a thermal head or heating roll to form a protective layer on the image.

Further, Japanese Patent Application No. 41441/1999 describes a highly fast intermediate transfer medium comprising a receptive layer provided on a separable transparent substrate. In this intermediate transfer medium, after the formation of an image in the receptive layer, the receptive layer with the image formed thereon, together with the transparent substrate, is brought into contact with an object so that the image surface faces the object to transfer the image onto the object.

JP-A-2000238439 describes an intermediate transfer recording medium in which a sheet substrate provided with a resin layer and a transparent sheet provided with a receptor layer are laminated on each other and the resin layer is to be peeled from the sheet substrate, wherein a portion of the transparent sheet including the receptor layer is half-cut.

EP 0 535 718 A2 describes an apparatus for forming required images on an objective body, comprising in combination: means for processing image data fed thereto, means for forming images, on the basis of image data, on an image-receiving sheet for image transfer by reliance on a sublimation image transfer system, and means for transferring said images formed on said image-receiving sheet onto the surface of an objective body.

JP-A-07186515 describes an intermediate transfer film formed by successively laminating a releasable protective layer, a hologram forming layer having a hologram pattern, a transparent membrane to which an image pattern based on image data is formed by sublimation transfer to the support of the transfer foil used in a card like data recording medium.

EP 0 980 267 A1 describes an intermediate transfer recording medium which is comprised by providing a transfer portion having a receptor layer on a substrate film.

EP 0 943 462 A2 describes a method for preparing a printed product in which a transfer layer of an intermediate transfer recording medium can be transferred via a transferring adhesive layer having a suitable adhesive property to either one of the transfer layer and a transfer-receiving material, and thus transferred images do not have turbulence.

The solution to the technical problem underlying the present invention is achieved by providing the subject matter defined in the claims.

In particular, according to the present invention, there is provided an intermediate transfer recording medium comprising: a sheet substrate provided with a resin layer; and a transparent sheet provided with a receptive layer, said transparent sheet provided with the receptive layer having been put on top of the sheet substrate provided with the resin layer so that the resin layer faces the transparent sheet on its side remote from the receptive layer, the resin layer being separable from the transparent sheet to transfer the transparent sheet provided with a receptive layer onto an object, the resin layer being formed of a polyethylene resin stacked on the sheet substrate by extrusion coating, wherein the lower side temperature of a die at the time of extrusion of the polyethylene is 295°C or below, wherein the resin layer has a two-layer structure of a first resin layer and a second resin layer provided in that order from the transparent sheet side and the first resin layer is composed mainly of an acrylic resin.

According to the present invention, there is further provided a printing method comprising the steps of, providing the intermediate transfer recording medium according to the present invention, printing an image in an area larger than a portion which is to be transferred onto the object.

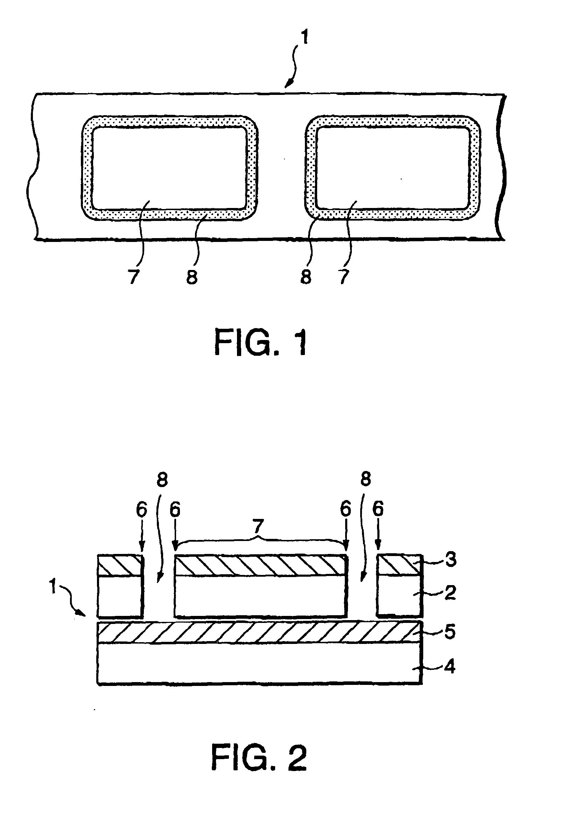

Fig. 1 is a plan view showing one embodiment of an intermediate transfer recording medium;
Fig. 2 is a cross-sectional view of the intermediate transfer recording medium shown in Fig. 1;

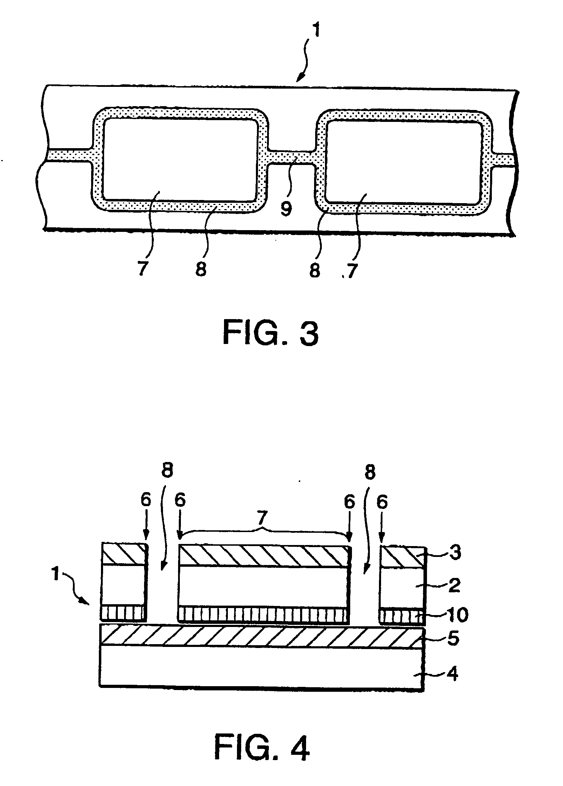

Fig. 3 is a plan view showing another embodiment of the intermediate transfer recording medium;
Fig. 4 is a cross-sectional view showing a further embodiment of the intermediate transfer recording medium;
Fig. 5 is a schematic perspective view showing the intermediate transfer recording medium in a continuously wound form;
Fig. 6 is a schematic diagram illustrating an embodiment of half cutting of the intermediate transfer recording medium;
Fig. 7 is a plan view showing an embodiment of the intermediate transfer recording medium;
Fig. 8 is a cross-sectional view showing an embodiment of the intermediate transfer recording medium;

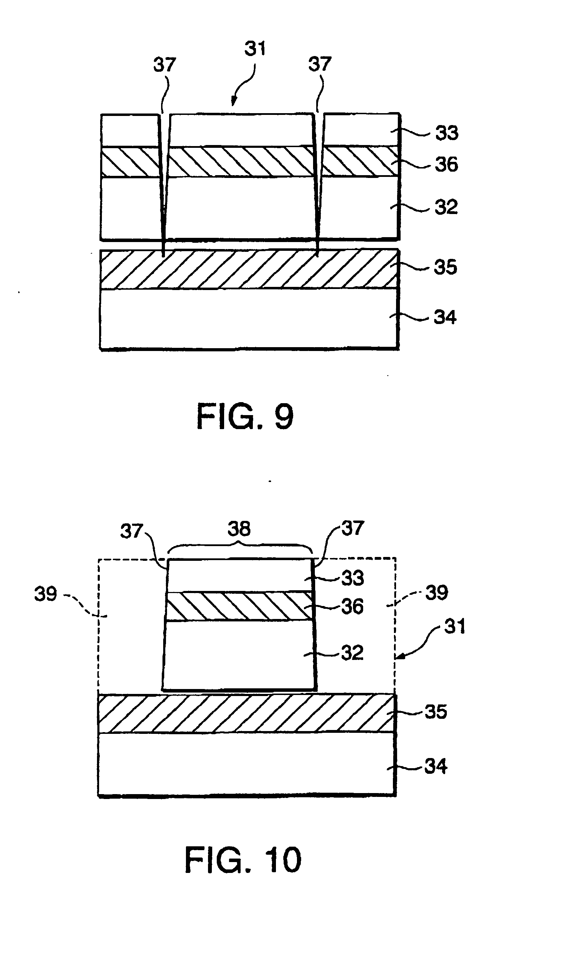

Fig. 9 is a schematic cross-sectional view showing an embodiment of the intermediate transfer recording medium;
Fig. 10 is a schematic cross-sectional view showing another embodiment of the intermediate transfer recording medium;
Figs. 11A, 11B, 11C, 11D, and 11E are schematic cross-sectional views illustrating an embodiment of the process for producing an intermediate transfer recording medium;
Fig. 12 is a schematic plan view showing another embodiment of the intermediate transfer recording medium;
Fig. 13 is a schematic cross-sectional view showing an embodiment of the intermediate transfer recording medium;
Fig. 14 is a schematic cross-sectional view showing another embodiment of the intermediate transfer recording medium;
Figs. 15A, 15B, 15C, and 15D are schematic diagrams illustrating an embodiment of the process for producing an intermediate transfer recording medium; and
Fig. 16 is a schematic plan view showing another embodiment of the intermediate transfer recording medium.

The conventional protective layer should be partially transferred at the time of transfer by means of a thermal head or a heat roll and thus should have good transferability. To this end, the protective layer should be a resin layer having a thickness of about several µm. This makes it impossible to impart fastness properties, such as high scratch resistance and chemical resistance, to images. Also regarding the protective layer formed in the intermediate transfer recording medium, satisfactory fastness properties, such as satisfactory scratch resistance and chemical resistance, cannot be imparted when the transferability is taken into consideration. A method can also be considered wherein the intermediate transfer recording medium is used to form an image on an object and a resin film is laminated so as to cover the image formed on the object to form a protective layer. This, however, is considered to be disadvantageous in that, for some shape in the object, the resin film is cockled at the time of the lamination, and, in addition, for example, a specialty device, such as a laminator, should be used, resulting in the increased number of steps.

Accordingly, in order to solve the above problems of the prior art, it is an object of the present invention to provide an intermediate transfer recording medium, which can form thermally transferred images possessing excellent various fastness properties even under severe service conditions, can realize the transfer of a protective layer on the image in the object with high accuracy without a failure of transfer in a simple manner, and a method for image formation.

The above object can be attained by an intermediate transfer recording medium according to the present invention.

In this construction, preferably, the whole portion except for the image forming portion has been separated and removed using the half cut as a boundary between the image forming portion remaining unremoved and the removal portion. This permits the patch portion of the image forming portion in the intermediate transfer recording medium to be simply transferred in a sharp and accurate edge shape.

The patch portion as the image forming portion, which has been separated by the half cutting, preferably has a size smaller than an object in its whole area on which an image is to be transferred. In this case, there is no fear of the patch portion being projected from the end of the object.

Preferably, the patch portion as the image forming portion, which has been separated by the half cutting, has a partially removed portion relative to an object. In this case, for example, the position of an object in its portion where the formation of no image is desired, for example, a sign panel, IC chip, magnetic stripe or other portion, or a design portion previously printed on the object, such as a logo or a hologram, can be registered with the partially removed portion, followed by the re-transfer of the patch onto the object. By virtue of this, in the sign panel, IC chip, magnetic stripe or other portion, a deterioration in performance in the post treatment of the portion can be prevented. Further, in the design portion, such as logo or hologram, the formation of an image on that portion deteriorates the transparent in that portion, that is, increases the opaqueness in that portion, leading to lowered quality. For this reason, that portion is excluded from the image forming portion. The sign panel portion is a portion where handwriting with writing implements, such as ballpoint pens, numbering by stamping ink, and sealing by vermilion inkpad or stamping ink.

Preferably, the total width of the intermediate transfer recording medium is larger than the width of an object in its face on which an image is to be transferred. According to this construction, in the formation of an image on the receptive layer in the intermediate transfer recording medium followed by the re-transfer of the image formed portion onto an object, a heating device, such as a thermal head, a press roll, or a press plate, does not come into direct contact with the object, and, thus, damage to the object can be avoided.

Further, there is provided a method for image formation, comprising the steps of: providing any one of the above intermediate transfer recording media; and transferring an image onto the receptive layer in the intermediate transfer recording medium to form an image on the receptive layer; and re-transferring only the image formed portion onto an object to form an image on the object.

An intermediate transfer recording medium comprising: a sheet substrate provided with a resin layer; and a transparent sheet provided with a receptive layer, the transparent sheet provided with the receptive layer having been put on top of the sheet substrate provided with the resin layer so that the resin layer faces the transparent sheet on its side remote from the receptive layer, the transparent sheet portion including the receptive layer having been half cut, the resin layer being separable from the transparent sheet, the peel force necessary for separating the transparent sheet portion from the sheet substrate provided with the resin layer at the time of the transfer of the transparent sheet portion including the receptive layer onto an object being in the range of 0.019 N/cm to 0.38 N/cm (5 to 100 gf/inch) as measured by the 180-degree peel method according to JIS Z 0237, can provide thermally transferred images possessing excellent various fastness properties even under severe service conditions and, by virtue of the half cutting, permits the protective layer (transparent sheet) to be transferred onto the image with high accuracy in a simple manner. Further, the regulation of the peel force for separating the transparent sheet portion from the sheet substrate provided with the resin layer in the above-defined range can prevent a failure of transfer and permits the transparent sheet portion to be simply transferred onto the object.

The present invention will be described in more detail with reference to the following preferred embodiments.

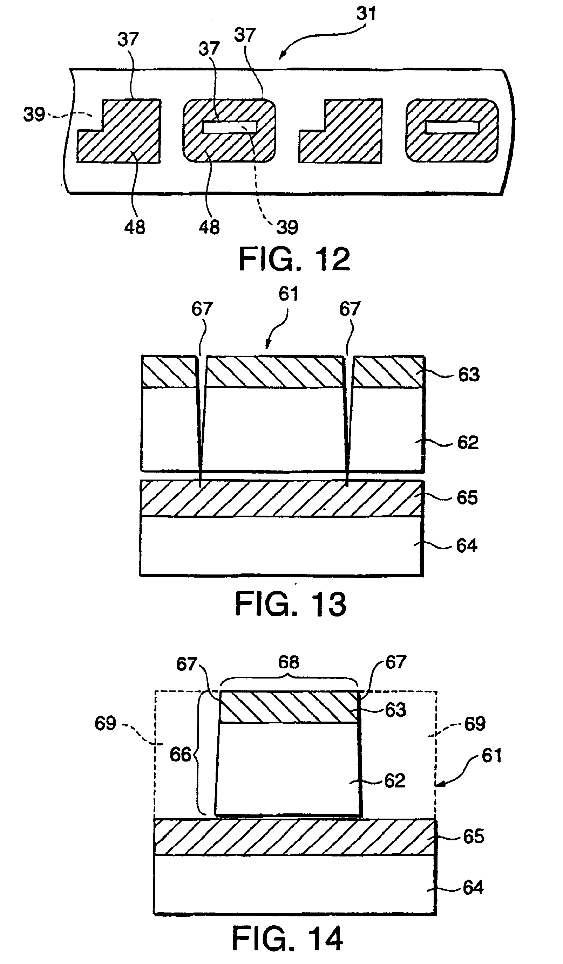

Fig. 13 is a schematic cross-sectional view showing one embodiment of the intermediate transfer recording medium 61.

In this intermediate transfer recording medium 61, a sheet substrate 64 having thereon a resin layer 65 and a transparent sheet 62 having thereon a receptive layer 63 are stacked onto each other so that the resin layer 65 faces the transparent sheet 62 and, in addition, the resin layer 65 is separable from the transparent sheet 62, wherein the transparent sheet portion 62 including the receptive layer 63 has been subjected to half cutting 67.

Fig. 14 is a schematic cross-sectional view showing another embodiment of the intermediate transfer recording medium 61. In this intermediate transfer recording medium 61, a sheet substrate 64 having thereon a resin layer 65 and a transparent sheet 62 having thereon a receptive layer 63 are stacked onto each other so that the resin layer 65 faces the transparent sheet 62 and, in addition, the resin layer 65 is separable from the transparent sheet 62, wherein the transparent sheet portion 62 including the receptive layer 63 has been subjected to half cutting 67 and a portion 69 except for an image forming portion 68 has been separated and removed using the half cut portion 67 as the boundary between the image forming portion 68 remaining unremoved and the removal portion. In this embodiment, before the step of forming an image by thermal transfer and re-transferring the transfer portion onto an object, the step of separating and removing the portion 69 except for the image forming portion 68 using the half cut portion 67 as the boundary between the portion remaining unremoved and the removal portion is provided. In this case, a patch portion 66 having thereon the image formed portion 68 is re-transferred onto an object. Therefore, in re-transferring the transfer portion onto the object, only the patch portion may be transferred. This can further simplify re-transfer onto the object.

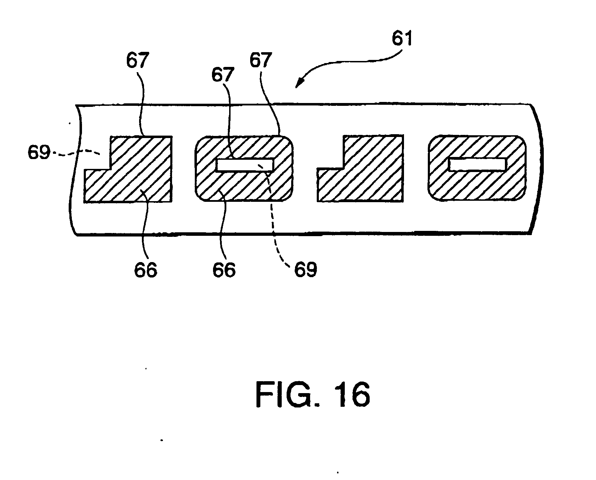

Fig. 16 is a schematic plan view showing a further embodiment of the intermediate transfer recording medium 61. In this intermediate transfer recording medium 61, a sheet substrate having thereon a resin layer and a transparent sheet having thereon a receptive layer are stacked onto each other so that the resin layer faces the transparent sheet and, in addition, the resin layer is separable from the transparent sheet, wherein the transparent sheet portion including the receptive layer has been subjected to half cutting 67. In this case, a patch portion 66 as the image forming portion is left using the half cut portion 67 as the boundary between the removal portion and the image forming portion remaining unremoved, and, as shown in the drawing, the outside of the patch portion 66 and the inside removal portion surrounded by the patch portion 66 are separated and removed. Upon the re-transfer of this patch portion 66 onto an object, the patch portion 66 has a partially removed portion 69 relative to the object. In this case, for example, a portion where the formation of no image as the patch portion is desired, such as a hologram portion or a logo portion in an object, for example, a sign panel, an IC chip, a magnetic stripe, or a credit card, is registered with the partially removed portion 69. By virtue of this, no image is present in a position where the formation of no image is contemplated. Thus, the occurrence of troubles can be prevented.

### (Transparent sheet)

In the transparent sheet 62 used in the intermediate transfer recording medium the transparent sheet portion is cut using the half cut portion as the boundary between the removal portion and the portion remaining unremoved, and the transparent sheet can function as a protective layer in such a state that the transparent sheet covers the surface of the image formed portion. The transparent sheet may be any one so far as the sheet is transparent and has fastness properties, such as weathering resistance, abrasion resistance, and chemical resistance. Examples of transparent sheets usable herein include about 0.5 to 100 µm-thick, preferably about 10 to 40 µm-thick, films of polyethylene terephthalate, 1,4-polycyclohexylene dimethylene terephthalate, polyethylene naphthalate, polyphenylenesulfide, polystyrene, polypropylene, polysulfone, aramid, polycarbonate, polyvinyl alcohol, cellulose derivatives, such as cellophane and cellulose acetate, polyethylene, polyvinyl chloride, nylon, polyimide, and ionomer.

The transparent sheet in its side facing the resin layer may be subjected to release treatment to facilitate the separation of the transparent sheet from the resin layer. In the release treatment, a release layer is provided on the transparent sheet. The release layer may be formed by coating a coating liquid containing, for example, a wax, silicone wax, a silicone resin, a fluororesin, an acrylic resin, a polyvinyl alcohol rein, or a cellulose derivative resin or a copolymer of monomers constituting the above group of resins onto the transparent sheet by conventional means, such as gravure printing, screen printing, or reverse roll coating using a gravure plate, and drying the coating. The coverage of the release layer is about 0.1 to 10 g/m² on a dry basis.

### (Receptive layer)

The receptive layer 63 may be formed on the transparent sheet either directly or through a primer layer. The construction of the receptive layer 63 varies depending upon the recording system, that is, whether the recording system is hot-melt transfer recording or sublimation transfer recording. In the hot-melt transfer recording, a method may also be adopted wherein a color transfer layer is thermally transferred from the thermal transfer sheet directly onto the transparent sheet without providing the receptive layer. In the hot-melt transfer recording and the sublimation transfer recording, the receptive layer functions to receive a colorant thermally transferred from the thermal transfer sheet. In particular, in the case of the sublimable dye, preferably, the receptive layer receives the dye, develops a color, and, at the same time, does not permit re-sublimation of the once received dye. A transfer image is formed on a receptive layer in an intermediate transfer recording medium, and only the image formed portion is re-transferred onto an object to form an image on the object. The receptive layer according to the present invention is generally transparent so that an image transferred onto the object can be clearly viewed from the top. However, it is also possible to intentionally make the receptive layer opaque or to intentionally lightly color the receptive layer to render the re-transferred image distinct.

The receptive layer is generally composed mainly of a thermoplastic resin. Examples of materials usable for forming the receptive layer include: polyolefin resins such as polypropylene; halogenated polymers such as vinyl chloride-vinyl acetate copolymer, ethylene-vinyl acetate copolymer, and polyvinylidene chloride; polyester resins such as polyvinyl acetate and polyacrylic esters; polystyrene resins; polyamide resins; copolymer resins produced from olefins, such as ethylene and propylene, and other vinyl monomers; ionomers; cellulosic resins such as cellulose diacetate; and polycarbonate resins. Among them, polyester resins and vinyl chloride-vinyl acetate copolymer and mixtures of these resins are particularly preferred.

In sublimation transfer recording, a release agent may be incorporated into the receptive layer, for example, from the viewpoint of preventing fusing between the thermal transfer sheet having a color transfer layer and the receptive layer in the intermediate transfer recording medium at the time of image formation or preventing a lowering in sensitivity in printing. Preferred release agents usable as a mixture include silicone oils, phosphoric ester surfactants, and fluorosurfactants. Among them, silicone oils are preferred. Preferred silicone oils include epoxy-modified, vinyl-modified, alkyl-modified, amino-modified, carboxyl-modified, alcohol-modified, fluorine-modified, alkyl aralkyl polyether-modified, epoxy-polyether-modified, polyether-modified and other modified silicone oils.

A single or plurality of release agents may be used. The amount of the release agent added is preferably 0.5 to 30 parts by weight based on 100 parts by weight of the resin for the receptive layer. When the amount of the release agent added is outside the above amount range, problems sometimes occur such as fusing between the sublimation-type thermal transfer sheet and the receptive layer in the intermediate transfer recording medium or a lowering in sensitivity in printing. The addition of the release agent to the receptive layer permits the release agent to bleed out on the surface of the receptive layer after the transfer to form a release layer. Alternatively, these release agents may be separately coated onto the receptive layer without being incorporated into the receptive layer. The receptive layer may be formed by coating a solution of a mixture of the above resin with a necessary additive, such as a release agent, in a suitable organic solvent, or a dispersion of the mixture in an organic solvent or water onto a transparent sheet by conventional forming means such as gravure coating, gravure reverse coating, or roll coating, and drying the coating. The receptive layer may be formed at any coverage. In general, however, the coverage of the receptive layer is 1 to 50 g/m² on a dry basis. The receptive layer is preferably in the form of a continuous coating. However, the receptive layer may be in the form of a discontinuous coating formed using a resin emulsion, a water-soluble resin, or a resin dispersion. Further, an antistatic agent may be coated onto the receptive layer from the viewpoint of realizing stable carrying of sheets through a thermal transfer printer.

### (Sheet substrate)

The sheet substrate 64 used in the present invention is not particularly limited, and examples thereof include: various types of paper, for example, capacitor paper, glassine paper, parchment paper, or paper having a high sizing degree, synthetic paper (such as polyolefin synthetic paper and polystyrene synthetic paper), cellulose fiber paper, such as wood free paper, art paper, coated paper, cast coated paper, wall paper, backing paper, synthetic resin- or emulsion-impregnated paper, synthetic rubber latex-impregnated paper, paper with synthetic resin internally added thereto, and paperboard; and films of polyester, polyacrylate, polycarbonate, polyurethane, polyimide, polyether imide, cellulose derivative, polyethylene, ethylene-vinyl acetate copolymer, polypropylene, polystyrene, acrylic resin, polyvinyl chloride, polyvinylidene chloride, polyvinyl alcohol, polyvinyl butyral, nylon, polyether ether ketone, polysulfone, polyether sulfone, tetrafluoroethylene-perfluoroalkyl vinyl ether, polyvinyl fluoride, tetrafluoroethylene-ethylene, tetrafluoroethylene-hexafluoropropylene, polychlorotrifluoroethylene, polyvinylidene fluoride and the like.

The thickness of the sheet substrate is preferably 10 to 100 µm. When the sheet substrate is excessively thin, the resultant intermediate transfer recording medium is not sturdy and thus cannot be carried by means of a thermal transfer printer or is disadvantageously curled or cockled. On the other hand, when the sheet substrate is excessively thick, the resultant intermediate transfer recording medium is excessively thick. In this case, the driving force of the thermal transfer printer necessary for carrying the intermediate transfer recording medium is excessively large, resulting in a printer trouble or a failure of the intermediate transfer recording medium to be normally carried.

### (Resin layer)

The resin layer 65 may be provided as a pressure-sensitive adhesive layer, an easy-adhesion adhesive layer, or an extrusion coating (EC) on the sheet substrate.

In the resin layer independently of whether the resin layer is in the form of a pressure-sensitive adhesive layer, an easy-adhesion adhesive layer, or an EC layer, the peel force, that is, the peel force for separating the transparent sheet portion from the sheet substrate provided with the resin layer, should be in the range of 0.019 N/cm to 0.38 N/cm (5 to 100 gf/inch) as measured by the 180-degree peel method according to JIS Z 0237. The peel force can be regulated in the above range by properly selecting the material (such as a binder) used in the resin layer and properly varying the layer thickness according to the type of the sheet substrate.

When the peel force is below the lower limit of the above range, the patch portion is likely to be separated and removed (for example, rolled up) during handling of the intermediate transfer recording medium. On the other hand, when the peel force is above the upper limit of the above range, the re-transfer of the patch portion onto the object is difficult. At the time of the formation of a thermally transferred image on the patch portion in the intermediate transfer recording medium, heat is more or less applied to the resin layer. It is a matter of course that the peel force should fall within the above-defined range after undergoing the heat history.

Further, the cohesive force of the resin layer is also important, and should be on a level such that, upon the separation, the resin layer is not left on the transparent sheet side, that is, no adhesive is left.

The pressure-sensitive adhesive layer may be formed of a conventional solvent-type or aqueous pressure-sensitive adhesive. Pressure-sensitive adhesives include, for example, acrylic resins, acrylic ester resins, or copolymers thereof, styrene-butadiene copolymers, naturally occurring rubbers, casein, gelatin, rosin esters, terpene resins, phenolic resins, styrene resins, coumarone indene resins, polyvinyl ethers, and silicone resins. Further, α-cyanoacrylate, silicone, maleimide, styrol, polyolefin, resorcinol, and polyvinyl ether adhesives may also be mentioned as the pressure-sensitive adhesive. Further, the pressure-sensitive adhesive layer may also be formed using the so-called "two-pack crosslinkable pressure-sensitive adhesive" wherein, in use, an isocyanate crosslinking agent, a metal chelate crosslinking agent or the like is added for crosslinking. If necessary, a tackifier resin (tackifier) may be added to the pressure-sensitive adhesive layer to bring the peel force to a value falling within the above-defined range. Tackifier resins include rosin tackifier resins, terpene tackifier resins, synthetic resin tackifiers, or mixtures of these tackifiers.

The coverage of the pressure-sensitive adhesive layer is generally about 8 to 30 g/m² on a solid basis, and the pressure-sensitive adhesive layer may be formed by coating the pressure-sensitive adhesive by a conventional method, for example, gravure coating, gravure reverse coating, roll coating, Komma coating, or die coating, on a release sheet and drying the coating. In the formation of the pressure-sensitive adhesive layer on the sheet substrate, the above-described type of adhesive and coverage are selected so that the peel strength is in the above-defined range. When the pressure-sensitive adhesive layer is provided on the sheet substrate and the transparent sheet is stacked onto the pressure-sensitive adhesive layer, a method may be adopted such as dry lamination or hot-melt lamination of the pressure-sensitive adhesive layer.

In the formation of the easy-adhesion adhesive layer, preferably, a latex of styrene-butadiene copolymer rubber (SBR), an acrylic resin, such as acrylonitrile-butadiene copolymer rubber (NBR) or a polyacrylic ester, a rubbery resin, a wax, or a mixture of two or more of the above materials is coated onto a sheet substrate by a conventional coating method, and the easy-adhesion adhesive layer is then stacked onto the transparent sheet by dry lamination with heating. The easy-adhesion adhesive layer after the separation of the transparent sheet from the sheet substrate has lowered tackiness and no longer can be used in the application of the transparent sheet to the sheet substrate. When this easy-adhesion adhesive layer is used, a primer layer may be provided between the sheet substrate and the easy-adhesion adhesive layer.

Further, an EC layer may be provided as the resin layer according to the present invention on the sheet substrate. The thermoplastic resin used for forming the EC layer is not particularly limited so far as the resin is not virtually adhered to the transparent sheet and is extrudable. In particular, however, a polyolefin resin is preferred which is not virtually adhered to PET films generally utilized in the transparent sheet and has excellent processability. More specifically, for example, LDPE, MDPE, HDPE, and PP resins are usable. In extrusion coating these resins, when a matte roll is used as a cooling roll, the matte face may be transferred onto the surface of the EC layer, whereby fine concaves and convexes can be formed to render the EC layer opaque. Alternatively, a method may be used wherein a white pigment, such as calcium carbonate or titanium oxide, is mixed into the polyolefin resin to form an opaque EC layer. The EC layer may be either a single-layer structure or a multi-layer structure of two or more layers. The peel strength of the EC layer from the transparent sheet may be regulated according to the processing temperature in the extrusion and the type of the resin. Thus, simultaneously with the extrusion of the EC layer on the sheet substrate, the sheet substrate can be stacked onto the transparent sheet through the EC layer by the so-called "EC lamination."

In providing the resin layer on the sheet substrate, a primer layer may be provided on the surface of the sheet substrate to improve the adhesion between the sheet substrate and the resin layer. Instead of the provision of the primer layer, the surface of the sheet substrate may be subjected to corona discharge treatment. The primer layer may be formed by providing a coating liquid in the form of a solution or dispersion of a polyester resin, a polyacrylic ester resin, a polyvinyl acetate resin, a polyurethane resin, a polyamide resin, a polyethylene resin, a polypropylene resin or the like in a solvent and coating the coating liquid by the same means as used in the formation of the receptive layer. The thickness of the primer layer is about 0.1 to 5 g/m² on a dry basis. The primer layer may also be formed between the transparent sheet and the receptive layer in the same manner as described above.

In the intermediate transfer recording medium according to the present invention, if necessary, a heat-resistant slip layer may be provided on the backside of the sheet substrate, that is, on the sheet substrate in its side remote from the resin layer, from the viewpoints of preventing adverse effect, such as sticking, caused by heat of a thermal head, a heat roll or the like as means for re-transferring the image formed portion onto an object, or cockling.

Any conventional resin may be used as the resin for constituting the heat-resistant slip layer, and examples thereof include polyvinyl butyral resins, polyvinyl acetoacetal resins, polyester resins, vinyl chloride-vinyl acetate copolymers, polyether resins, polybutadiene resins, styrene-butadiene copolymers, acrylic polyols, polyurethane acrylates, polyester acrylates, polyether acrylates, epoxy acrylates, prepolymers of urethane or epoxy, nitrocellulose resins, cellulose nitrate resins, cellulose acetopropionate resins, cellulose acetate butyrate resins, cellulose acetate hydrogen phthalate resins, cellulose acetate resins, aromatic polyamide resins, polyimide resins, polycarbonate resins, chlorinated polyolefin resins, and chlorinated polyolefin resins.

Slipperiness-imparting agents added to or topcoated on the heat-resistant slip layer formed of the above resin include phosphoric esters, silicone oils, graphite powder, silicone graft polymers, fluoro graft polymers, acrylsilicone graft polymers, acrylsiloxanes, arylsiloxanes, and other silicone polymers. Preferred is a layer formed of a polyol, for example, a high-molecular weight polyalochol compound, a polyisocyanate compound and a phosphoric ester compound. Further, the addition of a filler is more preferred.

The heat-resistant slip layer may be formed by dissolving or dispersing the resin, the slipperiness-imparting agent, and a filler in a suitable solvent to prepare an ink for the formation of a heat-resistant slip layer, coating the ink onto the backside of the substrate sheet by forming means, such as gravure printing, screen printing, or reverse coating using a gravure plate, and drying the coating.

The intermediate transfer recording medium according to the present invention comprises at least a receptive layer, a transparent sheet, a resin layer, and a sheet substrate. An antistatic layer may be provided on the surface of the receptive layer, the backside of the sheet substrate, or the outermost surface of both sides. The antistatic layer may be formed by coating a solution or dispersion of an antistatic agent, such as a fatty ester, a sulfuric ester, a phosphoric ester, an amide, a quaternary ammonium salt, a betaine, an amino acid, an acrylic resin, or an ethylene oxide adduct, in a solvent. The forming means used may be the same as that used in the formation of the receptive layer. The coverage of the antistatic layer is preferably 0.001 to 0.1 g/m² on a dry basis.

An intermediate layer formed of one of various resins may be provided between the substrate and the receptive layer in the transparent sheet. In this case, the intermediate layer is preferably transparent so that the re-transferred image can be viewed. When the intermediate layer has various functions, excellent functions can be imparted to the image-receiving sheet. For example, a highly elastically deformable or plastically deformable resin, for example, a polyolefin resin, a vinyl copolymer resin, a polyurethane resin, or a polyamide resin, may be used as a cushioning property-iniparting resin to improve the sensitivity in printing of the image-receiving sheet or to prevent harshness of images. Antistatic properties may be imparted to the intermediate layer by adding the antistatic agent to the cushioning property-imparting resin, dissolving or dispersing the mixture in a solvent, and coating the solution or dispersion to form an intermediate layer.

### (Half cutting)

In an intermediate transfer recording medium the transparent sheet portion including the receptive layer may be subjected to half cutting 67. The half cut may be formed by any method without particular limitation so far as half cutting is possible. Examples of methods usable for half cutting include a method wherein the intermediate transfer recording medium is inserted into between an upper die provided with a cutter blade and a pedestal and the upper die is then vertically moved, a method wherein a cylinder-type rotary cutter is used, and a method wherein heat treatment is carried out by means of a laser beam. As shown in Fig. 14, the portion 69 except for the patch portion 66 (including the image forming portion 68) is previously separated using the half cut portion 67 as the boundary between the portion remaining unremoved and the removal portion, and, at the time of image formation, the receptive layer 63 provided on the transparent sheet 62 is left only in the image forming portion 68. The removal of refuse in this way can eliminate a fear of the transparent sheet portion being cut by the half cut portion at the time of the re-transfer of the image onto the object. Thus, the patch portion (image formed portion) can be surely transferred onto the object.

Regarding the half cut portion 67, it is common practice to continuously provide a cut one round by one round around the image forming portion. In this case, an uncut (no cut) portion may be partially provided, for example, at four corners, to prevent the a trouble of separation of the half cut portion during handling, for example, during carriage through a thermal transfer printer. However, it should be noted that, in order that, at the time of the re-transfer of the image formed portion onto the object, the uncut portion is melt cut and the portion surrounded by the continuous half cut portion including the melt cut portion is transferred onto the object, the length of the uncut is preferably small and about 0.1 to 0.5 mm. Alternatively, perforation, such that half cuts and uncuts are alternately provided, may be provided. In the case of the perforation, for example, preferably, the length of the cut portion is about 2 to 5 mm, and the length of the uncut portion is about 0.1 to 0.5 mm. Examples of methods usable for the formation of the perforation include a method wherein the intermediate transfer recording medium is inserted into between an upper die, provided with a perforating blade, and a pedestal and the upper die is then vertically moved and a method wherein a cylinder-type rotary cutter.

At the time of half cutting, when the depth of the cut portion is excessively large in the depth direction, that is, when not only the transparent sheet portion but also the sheet substrate is cut, the intermediate transfer recording medium is cut at the half cut portion during carriage in the printer, often leading to carriage troubles. On the other hand, when the cut level is excessively low in the depth direction, for example, when a half cut is provided, for example, only in the receptive layer without the provision of a half cut in the transparent sheet, the resin layer and the transparent sheet cannot be separated from each other at the time of the re-transfer of the image-formed portion onto an object. Therefore, as shown in Fig. 13, the depth of the half cutting is preferably on a level such that passes through the receptive layer and the transparent sheet and slightly bites the resin layer in the thicknesswise direction. Preferably, the half cutting according to the present invention is previously carried out before the formation of an image on the receptive layer in the intermediate transfer recording medium. However, alternatively, the half cutting may be carried out according to the image region after the formation of an image on the receptive layer in the intermediate transfer recording medium.

### (Method for image formation)

The method for image formation comprises the steps of: providing the above intermediate transfer recording medium; transferring an image onto the receptive layer in the intermediate transfer recording medium to form an image on the receptive layer; and re-transferring only the image formed portion onto an object to form an image on the object.

In the thermal transfer recording method for forming an image on the receptive layer, thermal energy controlled by an image signal is generated by means of a thermal head and is used as activation energy of a recoding material such as ink. In this method, a thermal transfer sheet comprising a thermally transferable colorant layer provided on a substrate sheet is put on top of recording paper. The assembly is passed through between a thermal head and a platen under suitable pressure, and the recording material is activated by the thermal head at a temperature increased by energization and transferred onto the recording paper with the aid of pressure of the platen.

The transfer recording method is classified into sublimation dye thermal transfer (sublimation-type thermal transfer) and thermal ink transfer (hot melt-type thermal transfer). Both the types can be used in the formation of an image on an object according to the present invention. Further, the sublimation dye thermal transfer may be used in combination with the thermal ink transfer. In this case, for example, a halftone image may be formed by the sublimation dye thermal transfer recording while forming character images by the thermal ink transfer recording.

The thermal transfer recording can be carried out by the thermal head, as well as by thermal transfer means utilizing laser beam irradiation heating.

Regarding the thermal transfer recording, an intermediate transfer recording medium is preferably such that a register mark is provided in the intermediate transfer recording medium and half cutting has been performed based on the register mark. At the time of the thermal transfer recording, this register mark is detected to register the position of the thermal transfer image on the intermediate transfer recording medium.

According to the present invention, examples of means for re-transferring the image formed portion onto an object include: one wherein the object and the intermediate transfer recording medium with an image formed thereon are sandwiched between a thermal head and a platen and the assembly is heated by the thermal head; one wherein a heat roll system is used (a commercially available laminator is in many cases of this type wherein hot pressing is carried out by a pair of heat rolls); one wherein the object and the intermediate transfer recording medium are sandwiched between a heated flat plate and a flat plate or between a heated flat plate and a roll followed by hot pressing; and one wherein thermal transfer is carried out by heating utilizing laser beam irradiation.

When the thermal head is used as means for re-transferring the image onto the object, the thermal head may be the same as used in the image formation, or alternatively, may be different from the thermal head used in the image formation. In the method for image formation according to the present invention, the thermal transfer means for image formation and the means for the re-transfer of the image onto the object are preferably carried out on an in-line basis by means of one thermal transfer printer from the viewpoint of efficiency.

In the re-transfer, as with the thermal transfer recording, preferably, the register mark of the intermediate transfer recording medium is detected to register the position of the thermally transferred image on the intermediate transfer recording medium with the position of the object.

### The Invention

According to the invention, there is provided an intermediate transfer recording medium comprising: a sheet substrate provided with a resin layer; and a transparent sheet provided with a receptive layer, said transparent sheet provided with the receptive layer having been put on top of the sheet substrate provided with the resin layer so that the resin layer faces the transparent sheet on its side remote from the receptive layer, the resin layer being separable from the transparent sheet to transfer the transparent sheet provided with a receptive layer onto an object, the resin layer having a multi-layer structure of two or more layers.

In this intermediate transfer recording medium, the resin layer is formed of a polyolefin resin stacked on the sheet substrate by extrusion coating.

In the present invention, "extrusion coating" refers to a method wherein a resin pellet or powder is fed into a hopper and, while heating and kneading in a screw, is extruded through a T-die in the form of a film which is then stacked onto the substrate, or a method wherein the resin is extruded between two substrates to apply the substrates to each other.

In the above preferred embodiment, the polyolefin resin is preferably low-density polyethylene. Here "low density polyethylene" refers to polyethylene having a density of not more than 0.93 g/cm³.

The lower side temperature of a die at the time of extrusion of the low density polyethylene is 295°C or below.

Further, according to another embodiment of the present invention, the polyolefin resin is preferably medium density polyethylene. Here "medium density polyethylene" refers to polyethylene having a density of 0.93 to 0.94 g/cm³.

The resin layer has a two-layer structure of a first resin layer and a second resin layer provided in that order from the transparent sheet side in the stacked state and the first resin layer is composed mainly of an acrylic resin.

In the above embodiment, the second resin layer is preferably an adhesive layer. According to another embodiment of the present invention, the second resin layer is preferably formed of a polyolefin resin.

According to still another embodiment of the present invention, the resin layer may have a three-layer structure of a first resin layer, a second resin layer, and a third resin layer provided in that order.

According to a preferred embodiment of the present invention, the transparent sheet portion including the receptive layer may have been subjected to half cutting.

The above embodiment includes a construction such that the transparent sheet including the receptive layer in its half cut portion, on which no image is to be formed, has been previously removed.

The present invention includes a printing method comprising the step of printing an image in an area larger than a patch portion as an image forming portion.

The following examples and comparative examples further illustrate the present invention. In the following description, "parts" or "%" is by mass.

### Example A1 (Reference Example)

A receptive layer having the following composition was provided on a 25 µm-thick polyethylene terephthalate film (Lumirror, manufactured by Toray Industries, Inc.) as a transparent sheet to a thickness of 4 µm on a dry basis. Separately, a 38 µm-thick polyethylene terephthalate film (Lumirror, manufactured by Toray Industries, Inc.) was provided as a sheet substrate. A resin layer having the following composition was provided on the sheet substrate to a thickness of 3 µm on a dry basis. The sheet substrate with the resin layer formed thereon was dry laminated onto the transparent sheet with the receptive layer formed thereon so that the resin layer faced the transparent sheet on its side remote from the receptive layer.

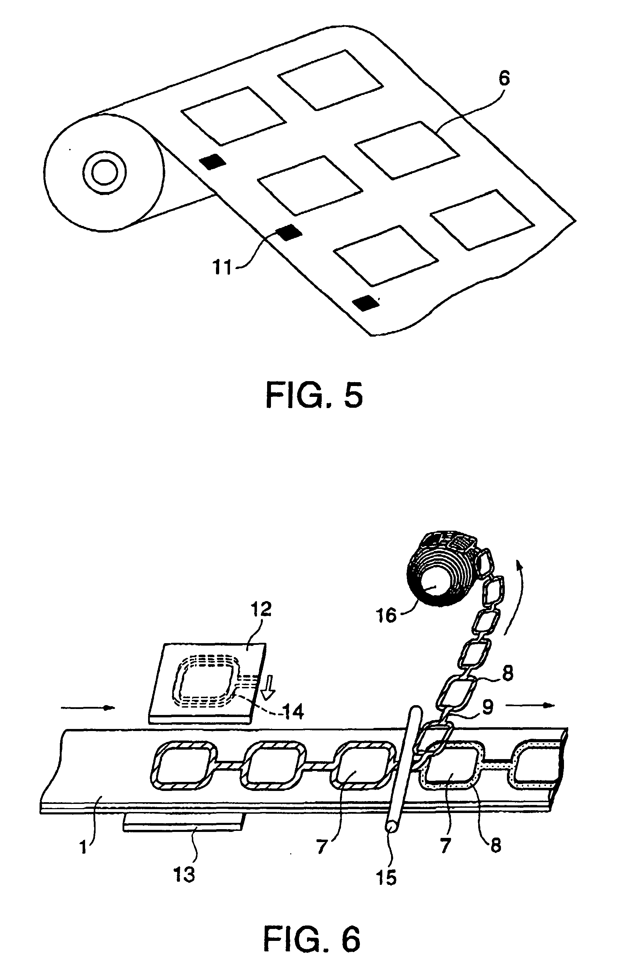

Further, in the laminate thus obtained, as shown in Fig. 6, the transparent sheet portion including the receptive layer was cut by pressing an upper die 12, provided with a cutter blade 14, and a pedestal 13 against the transparent sheet portion including the receptive layer and the refuse of the transparent sheet provided with the receptive layer was continuously removed by means of a separation roll 15 in such a state that a region 7, to be transferred onto an object, in its outer peripheral portion (8) was connected to a connection 9. The refuse was wound by means of a refuse removal roll 16.

Thus, a continuously wound intermediate transfer recording medium of Example A1 was provided. This intermediate transfer recording medium was separable in its portion between the resin layer and the transparent sheet.

| [Composition of coating liquid for receptive layer] | |
|---|---|
| Vinyl chloride-vinyl acetate copolymer (VYHD, manufactured by Union Carbide Corporation) | 100 parts |
| Epoxy-modified silicone (KF-393, manufactured by The Shin-Etsu Chemical Co., Ltd.) | 8 parts |
| Amino-modified silicone (KS-343, manufactured by The Shin-Etsu Chemical Co., Ltd.) | 8 parts |
| Methyl ethyl ketone/toluene (mass ratio = 1/1) | 400 parts |

| [Composition of coating liquid for resin layer] (easy-adhesion adhesive layer type) | |
|---|---|
| NBR resin (Nipol SX 1503, manufactured by Nippon Zeon Co.) Carnauba wax (WE 188, manufactured | 30 parts |
| by Konishi Co., Ltd.) | 0.6 part |
| Water | 35 parts |
| Isopropyl alcohol | 35 parts |

### Example A2 (Reference Example)

An intermediate transfer recording medium of Example A2 was provided in the same manner as in Example A1, except that the composition of the coating liquid for a resin layer used in Example A1 was changed as follows.

| [composition of coating liquid for resin layer] (easy-adhesion adhesive layer type) | |
|---|---|
| Acrylic resin latex (LX 874, manufactured by Nippon Zeon Co., Ltd.) | 30 parts |
| Water | 35 parts |
| Isopropyl alcohol | 35 parts |

### Example A3 (Reference Example)

A receptive layer was provide on a transparent sheet in the same manner as in Example A1. Separately, a 38 µm-thick polyethylene terephthalate film (Lumirror, manufactured by Toray Industries, Inc.) was provided as a sheet substrate. A resin of low density polyethylene (LDPE) with 15% of titanium oxide being dispersed therein was extrusion coated on the sheet substrate to a thickness of 40 µm. Simultaneously with the extrusion, the transparent sheet with the receptive layer formed thereon was EC laminated onto the sheet substrate with the resin layer formed thereon so that the transparent sheet on its side remote from the receptive layer faced the LDPE layer provided on the sheet substrate.

Further, in the laminate thus obtained, as shown in Fig. 6, the transparent sheet portion including the receptive layer was cut by pressing an upper die 12, provided with a cutter blade 14, and a pedestal 13 against the transparent sheet portion including the receptive layer and the refuse of the transparent sheet provided with the receptive layer was continuously removed by means of a separation roll 15 in such a state that a region 7, to be transferred onto an object, in its outer peripheral portion (8) was connected to a connection 9. The refuse was wound by means of a refuse removal roll 16. Thus, a continuously wound intermediate transfer recording medium of Example A3 was provided. This intermediate transfer recording medium was separable in its portion between the resin layer and the transparent sheet.

### Comparative Example A1

A peel layer having the following composition was formed on a 25 µm-thick polyethylene terephthalate film (Lumirror, manufactured by Toray Industries, Inc.) to a thickness of 1 µm on a dry basis. The coating liquid for a receptive layer used in Example A1 was coated onto the peel layer to form a receptive layer having a thickness of 3 µm on a dry basis. Further, an adhesive layer having the following composition 1 was formed on the receptive layer to a thickness of 3 µm on a dry basis. Thus, a receptive layer transfer sheet was provided.

Separately, the coating liquid for a peel layer used in the preparation of the receptive layer transfer sheet was coated on a 25 µm-thick polyethylene terephthalate film (Lumirror, manufactured by Toray Industries, Inc.) to form a peel layer having a thickness of 1 µm on a dry basis. A protective layer having the following composition was formed on the peel layer to a thickness of 3 µm on a dry basis. Further, an adhesive layer having the following composition 2 was formed on the protective layer to a thickness of 3 µm on a dry basis. Thus, a protective layer transfer sheet was provided.

| [Composition of coating liquid for peel layer] | |
|---|---|
| Polyvinyl alcohol resin (AH-17, manufactured by Nippon Synthetic Chemical Industry Co., Ltd.) | 100 parts |
| Water | 400 parts |

| [Composition of coating liquid 1 for adhesive layer] | |
|---|---|
| Polymethyl methacrylate resin (BR-106, manufactured by Mitsubishi Rayon Co., Ltd.) | 100 parts |
| Foaming agent (F-50, manufactured by Matsumoto Yushi Seiyaku Co., Ltd.) | 15 parts |
| Titanium oxide (TCA-888, manufactured by Tohchem Products Corporation) Methyl ethyl ketone/toluene | 100 parts |
| (mass ratio = 1/1) | 300 parts |

| [Composition of coating liquid for protective layer] | |
|---|---|
| Vinyl chloride-vinyl acetate copolymer (VYHD, manufactured by Union Carbide Corporation) | 100 parts |
| Methyl ethyl ketone/toluene (mass ratio = 1/1) | 400 parts |

| [Composition of coating liquid 2 for adhesive layer] | |
|---|---|
| Acrylic resin (BR-106, manufactured by Mitsubishi Rayon Co., Ltd.) | 100 parts |
| Methyl ethyl ketone/toluene (mass ratio = 1/1) | 300 parts |

An image was formed on the receptive layer in the samples provided in the examples and the comparative examples under the following conditions. For the sample provided in Comparative Example A1, a protective layer was further stacked on the image-receptive layer.

A thermal transfer sheet (manufactured by Dai Nippon Printing Co., Ltd.), wherein three color transfer layers for yellow, magenta, and cyan as dye layers had been provided in a face serial manner, and each of the intermediate transfer recording media provided in the respective examples were put on top of the other so that each color transfer layer faced the receptive layer. Recording was then carried out by a thermal head of a thermal transfer printer from the backside of the thermal transfer sheet under conditions of head application voltage 12.0 V, pulse width 16 msec, printing cycle 33.3 msec, and dot density 6 dots/line. Thus, a full-color photograph-like image (a mirror image) of a face was formed on the receptive layer in the intermediate transfer recording medium.

In the samples of the examples, the intermediate transfer recording medium was put on top of a PET card as an object so that the receptive layer with the image formed thereon in the intermediate transfer recording medium faced the PET card. A thermal head and a platen roll were pressed against the assembly, and energy was applied to a region 7, to be transferred onto an object, under conditions of 160 mJ/mm² and printing speed 33.3 msec/line (feed pitch 6 lines/mm) to adhere the image-receptive layer to the object. The sheet substrate was then separated. Thus, only the region 7 could be re-transferred onto the object to form an image.

For the samples provided in the examples, the print thus obtained were such that the transparent sheet covered the surface of the image forming portion and thus functioned as an even firm protective layer, whereby fastness properties could be fully imparted to the image. Further, since the transparent sheet portion was previously cut in the half cut inside portion, the protective layer could be simply transferred onto the object for each image with high accuracy. By virtue of this, prints thus obtained had excellent design and fastness properties.

In the sample provided in Comparative Example A1, a PET card as an object and the receptive layer transfer sheet were put on top of each other, and the receptive layer was transferred onto the PET card by means of a thermal head. Next, the thermal transfer sheet as used in the recording of the intermediate transfer recording medium was put on top of the surface of the receptive layer, and a full-color photograph-like image (non-reverse image) of a face was formed on the receptive layer by means of a thermal head under conditions of head application voltage 12.0 V, pulse width 16 msec, printing cycles 33.3 msec, and dot density 6 dots/line.

Further, a protective layer was transferred from the protective layer transfer sheet onto the image forming portion through the application of energy by means of the thermal head.

Next, the samples prepared in the examples and the comparative example were tested for Taber abrasion under conditions of CS-10 as a truck wheel, load on image 500 g, and 1400 cycles. The results were as follows.

In the test, the image was visually inspected for whether or not the abrasion resulted in the disappearance of the image.

**Table A1**

| | Taber abrasion test |
|---|---|
| Ex. 1 | OK (Image did not disappear) |
| Ex. 2 | OK (Image did not disappear) |
| Ex. 3 | OK (Image did not disappear) |
| Comp.Ex. 1 | NG (Image disappeared) |

As described above, the intermediate transfer recording medium comprises a sheet substrate provided with a resin layer and a transparent sheet provided with a receptive layer, the transparent sheet provided with the receptive layer having been put on top of the sheet substrate provided with the resin layer so that the resin layer faces the transparent sheet on its side remote from the receptive layer, the resin layer being separable from the transparent sheet at the time of transfer to transfer the transparent sheet provided with a receptive layer onto an object, the transparent sheet portion including the receptive layer having been half cut in a specific form. In this case, the half cutting may be carried out by removing the transparent sheet provided with the receptive layer in a predetermined width around the outer periphery of the region to be transferred onto the object.

The intermediate transfer recording medium is used to form a transfer image in the receptive layer, and the image formed portion is re-transferred onto an object to form an image. In this case, since the transparent sheet provided with the receptive layer has been partially removed from the end of the region, to be transferred onto the object, toward the outside, an unnecessary portion is not transferred onto the object. Further, there is no possibility that, in the intermediate transfer recording medium, a pressure-sensitive adhesive is exposed leading to blocking or the like.

Therefore, the resultant print is such that the transparent sheet covers the surface of the image formed portion and thus functions as an even firm protective layer. Thus, fastness properties can be fully imparted to images. Further, since the transparent sheet portion is previously cut in the half cut inside portion, the protective layer can be simply transferred onto the object for each image with high accuracy. By virtue of this, prints thus obtained have excellent design and fastness properties.

### Example B1 (Reference Example)

A receptive layer having the following composition was provided on a 25 µm-thick polyethylene terephthalate film (Lumirror, manufactured by Toray Industries, Inc.) as a transparent sheet at a coverage of 3 g/m² on a dry basis. Next, a 25 µm-thick polyethylene terephthalate film (Lumirror, manufactured by Toray Industries, Inc.) was provided as a sheet substrate. A resin layer having the following composition was provided on the sheet substrate at a coverage of 1 g/m² on a dry basis. The sheet substrate with the resin layer formed thereon was dry laminated onto the transparent sheet with the receptive layer formed thereon so that the resin layer faced the transparent sheet on its side remote from the receptive layer.

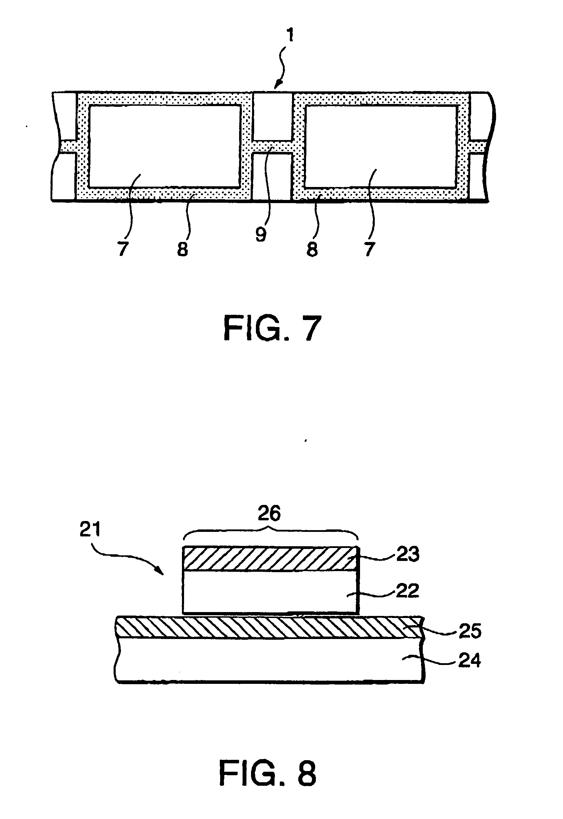

Further, in the laminate thus obtained, as shown in Fig. 8, the transparent sheet portion including the receptive layer was half cut, and the transparent sheet, provided with the receptive layer, in its portion around the region to be transferred onto an object was torn off. Thus, a continuously wound intermediate transfer recording medium of Example B1 was prepared.

| [Composition of coating liquid for receptive layer] | |
|---|---|
| Vinyl chloride-vinyl acetate copolymer (#1000A, manufactured by Denki Kagaku Kogyo K.K.) | 100 parts |
| Epoxy-modified silicone (KF-393, manufactured by The Shin-Etsu Chemical Co., Ltd.) | 5 parts |
| Amino-modified silicone (KF-343, manufactured by The Shin-Etsu Chemical Co., Ltd.) | 5 parts |
| Methyl ethyl ketone/toluene (mass ratio = 1/1) | 400 parts |

| | |
|---|---|
| [composition of coating liquid for resin layer] | |
| Addition polymerization-type (hydrosilylation-type) silicone pressure-sensitive adhesive (X-40-3102, manufactured by The Shin-Etsu Chemical Co., Ltd.) | 100 parts |
| Catalyst (CAT-PL-50T, manufactured by The Shin-Etsu Chemical Co., Ltd.) | 0.5 part |
| Methyl ethyl ketone/toluene (mass ratio = 1/1) | 400 parts |

### Example B1-1 (Reference Example)

An intermediate transfer recording medium of Example B1-1 was prepared in the same manner as in Example B1, except that the coating liquid for the receptive layer and the coating liquid for the resin layer used in Example B1 were changed respectively to coating liquids having the following compositions.

| [composition of coating liquid for receptive layer] | |
|---|---|
| Polyester resin (MD-1500, manufactured by Toyobo Co., Ltd.) | 100 parts |
| Teflon filler (Ruburon L5, average particle diameter 7 µm, manufactured by Daikin Industries, Ltd.) | 1.5 parts |
| Water/isopropyl alcohol (mass ratio = 1/1) | 200 parts |

| [Composition of coating liquid for resin layer] | |
|---|---|
| Addition polymerization-type (hydrosilylation-type) silicone pressure-sensitive adhesive (X-40-3102, manufactured by The Shin-Etsu Chemical Co., Ltd.) | 100 parts |
| Catalyst (CAT-PL-50T, manufactured by The Shin-Etsu Chemical Co., Ltd.) | 0.5 part |
| Methyl ethyl ketone/toluene (mass ratio = 1/1) | 400 parts |

### Example B2 (Reference Example)

An intermediate transfer recording medium of Example B2 was prepared in the same manner as in Example B1, except that the coating liquid for the resin layer used in Example B1 was changed to a coating liquid having the following composition.

| [Composition of coating liquid for resin layer] | |
|---|---|
| Addition polymerization-type (hydrosilylation-type) silicone pressure-sensitive adhesive (X-40-3103, manufactured by The Shin-Etsu Chemical Co., Ltd.) | 100 parts |
| Microsilica (Snowtex MEK-ST, manufactured by Nissan Chemical Industries Ltd.) | 100 parts |
| Catalyst (CAT-PL-50T, manufactured by The Shin-Etsu Chemical Co., Ltd.) | 0.5 part |
| Methyl ethyl ketone/toluene (mass ratio = 1/1) | 700 parts |

### Example B3 (Reference Example)

An intermediate transfer recording medium of Example B3 was prepared in the same manner as in Example B1, except that the coating liquid for the resin layer used in Example B1 was changed to a coating liquid having the following composition.

| [Composition of coating liquid for resin layer] | |
|---|---|
| Addition polymerization-type (hydrosilylation-type) silicone pressure-sensitive adhesive (X-40-3102, manufactured by The Shin-Etsu Chemical Co., Ltd.) | 75 parts |
| Addition polymerization-type (hydrosilylation-type) silicone pressure-sensitive adhesive (X-40-3103, manufactured by The Shin-Etsu Chemical Co., Ltd.) | 25 parts |
| Catalyst (CAT-PL-50T, manufactured by The Shin-Etsu Chemical Co., Ltd.) | 0.5 part |
| Methyl ethyl ketone/toluene (mass ratio = 1/1) | 400 parts |

### Example B4 (Reference Example)

An intermediate transfer recording medium of Example B4 was prepared in the same manner as in Example B1, except that the coating liquid for the resin layer used in Example B1 was changed to a coating liquid having the following composition.

| [Composition of coating liquid for resin layer] | |
|---|---|
| Addition polymerization-type (hydrosilylation-type) silicone pressure-sensitive adhesive (X-40-3102, manufactured by The Shin-Etsu Chemical Co., Ltd.) | 50 parts |
| Addition polymerization-type (hydrosilylation-type) silicone pressure-sensitive adhesive (X-40-3103, manufactured by The Shin-Etsu Chemical Co., Ltd.) | 50 parts |
| Microsilica (Snowtex MEK-ST, manufactured by Nissan Chemical Industries Ltd.) | 30 parts |
| Catalyst (CAT-PL-50T, manufactured by The Shin-Etsu Chemical Co., Ltd.) | 0.5 part |
| Methyl ethyl ketone/toluene (mass ratio = 1/1) | 400 parts |

### Example B5 (Reference Example)

An intermediate transfer recording medium of Example B5 was prepared in the same manner as in Example B1, except that, in the intermediate transfer recording medium prepared in Example B1, a release layer was provided on the transparent sheet in its side remote from the receptive layer by coating a coating liquid having the following composition at a coverage of 0.1 g/m² on a dry basis.

| [Composition of coating liquid for release layer] | |
|---|---|
| Release agent (X-70-201, manufactured by The Shin-Etsu Chemical Co., Ltd.) | 100 parts |
| Catalyst (CAT-PL-50T, manufactured by The Shin-Etsu Chemical Co., Ltd.) | 0.5 part |
| Solvent (FR Thinner, manufactured by The Shin-Etsu Chemical Co., Ltd.) | 400 parts |

### Comparative example B1

An intermediate transfer recording medium of Comparative Example B1 was prepared in the same manner as in Example B1, except that the coating liquid for the resin layer used in Example B1 was changed to a coating liquid having the following composition and the lamination was carried out at 60°C.

| [Composition of coating liquid for resin layer] | |
|---|---|
| NBR resin (Nipol SX-1503, manufactured by Nippon Zeon Co.) | 30 parts |
| Carnauba wax (WE 188, manufactured by Konishi Co., Ltd.) | 0.6 part |
| Water | 35 parts |
| Isopropyl alcohol | 35 parts |

### Comparative Example B2

An intermediate transfer recording medium of Comparative Example B2 was prepared in the same manner as in Example B1, except that the coating liquid for the resin layer used in Example B1 was changed to a coating liquid having the following composition and the lamination was carried out at 60°C.

| [Composition of coating liquid for resin layer] | |
|---|---|
| Acrylic resin latex (NIPOL LX-874, manufactured by Nippon Zeon Co., Ltd.) | 30 parts |
| Water | 35 parts |
| Isopropyl alcohol | 35 parts |

### Comparative Example B3

An intermediate transfer recording medium of Comparative Example B3 was prepared in the same manner as in Example B1, except that the coating liquid for the resin layer used in Example B1 was changed to a coating liquid having the following composition and the lamination was carried out at 60°C.

| [Composition of coating liquid for resin layer] | |
|---|---|
| Acrylic pressure-sensitive adhesive (SK Dyne SK-1473, manufactured by | |
| Soken Chemical Engineering Co., Ltd.) | 100 parts |
| Catalyst (M-5A, manufactured by Soken Chemical Engineering Co., Ltd.) | 6 parts |
| Toluene/ethyl acetate (mass ratio = 1/1) | 400 parts |

### Comparative Example B4

An intermediate transfer recording medium of Comparative Example B4 was prepared in the same manner as in Example B1, except that the coating liquid for the resin layer used in Example B1 was changed to a coating liquid having the following composition.

| [Composition of coating liquid for resin layer] | |
|---|---|
| Acrylic pressure-sensitive adhesive (SK Dyne SK-1495, manufactured by Soken Chemical Engineering Co., Ltd.) | 100 parts |
| Curing agent (L-45, manufactured by Soken Chemical Engineering Co., Ltd.) | 0.2 part |
| Toluene/ethyl acetate (mass ratio = 1/1) | 400 parts |

### Comparative Example B5

An intermediate transfer recording medium of Comparative Example B5 was prepared in the same manner as in Example B1, except that the coating liquid for the resin layer used in Example B1 was changed to a coating liquid having the following composition and the lamination was carried out at 100°C.

| [Composition of coating liquid for resin layer] | |
|---|---|
| Polyester resin (Resem ES-1H, manufactured by Chukyo Yushi Co., Ltd.) | 100 parts |
| Water | 200 parts |

The samples prepared in the above examples and comparative examples were evaluated for the following items.

### (Evaluation method)

### (Peel force)

Peel force between the resin layer and the transparent sheet was measured with Tensilon (load cell: 1 kg, load cell speed 100 mm/min) under conditions of sample width 2.54 cm (1 inch) and 180-degree peeling. Conditions other than described above were the same as those specified in JIS Z 0237.

### (Peel force after storage)

The samples were stored in a 60°C/humidity free environment for 48 hr to examine a change in peel force with the elapse of time. The peel force was measured under the conditions as described above.

### (Releasability)

A thermal transfer sheet (manufactured by Dai Nippon Printing Co., Ltd.), wherein three color transfer layers for yellow, magenta, and cyan as dye layers had been provided in a face serial manner, and the resin layer portion obtained by removing the transparent sheet provided with the receptive layer from each of the intermediate transfer recording media prepared in the above examples and comparative examples were put on top of each other so that the color transfer layer faced the resin layer. Recording was then carried out by a thermal head of a thermal transfer printer from the backside of the thermal transfer sheet under conditions of application voltage 12.0 V, pulse width 16 msec, printing cycle 33.3 msec, and dot density 6 dots/line to examine the releasability of the resin layer from the thermal transfer sheet.

For the intermediate transfer recording medium prepared in Example B1-1, the following thermal ink-type thermal transfer sheet for image formation was used to form an image.

Specifically, a 6 µm-thick polyethylene terephthalate film (Lumirror, manufactured by Toray Industries, Inc.) was provided as a substrate film, and a release layer, a peel layer, and a hot-melt black ink layer were formed in that order on the substrate film to form a thermal transfer sheet. In this thermal transfer sheet, a sublimable dye layer was not provided.

An ink prepared according to the following formulation was coated on the substrate film at a coverage of 0.2 g/m² on a solid basis, and the coating was dried to form a release layer.

| [Composition of coating liquid for release layer] | |
|---|---|
| Urethane resin (Crisvon 9004, manufactured by DIC) | 20 parts |
| Polyvinyl acetoacetal resin (KS-5, manufactured by Sekisui Chemical Co., Ltd.) | 5 parts |
| Brightening agent (Uvitex OB, manufactured by Ciba-Geiby Ltd.) | 0.5 part |
| Dimethylformalumide | 80 parts |
| Methyl ethyl ketone | 120 parts |

An ink prepared according to the following formulation was coated on the release layer at a coverage of 1 g/m² on a solid basis, and the coating was dried to form a peel layer.

| [Composition of coating liquid for peel layer] | |
|---|---|
| Vinyl chloride-vinyl acetate copolymer resin (1000 ALK, manufactured by Denki Kagaku Kogyo K.K.) | 20 parts |
| Epoxy-modified silicone (KP 1800-U, manufactured by The Shin-Etsu Chemical Co., Ltd.) | 1 part |
| Methyl ethyl ketone/toluene (mass ratio = 1/1) | 80 parts |

An ink prepared according to the following formulation was coated on the peel layer at a coverage of 1 g/m² on a solid basis, and the coating was dried to form a hot-melt ink layer.

| [Composition of coating liquid for hot-melt ink layer] | |
|---|---|
| Acryl-vinyl chloride-vinyl acetate copolymer resin | 20 parts |
| Carbon black | 10 parts |
| Methyl ethyl ketone/toluene (mass ratio = 1/1) | 70 parts |

A thermal transfer sheet for yellow, a thermal transfer sheet for magenta, and a thermal transfer sheet for cyan were prepared in the same manner as described just above, except that pigments PY-180, PR-57 : 1, and PB-15 : 4 were used instead of carbon black. The thermal transfer sheets thus obtained were used to record images and characters in the receptive layer on the transparent sheet from the backside of the thermal transfer sheets by means of a thermal transfer printer (SMAPRO 560 D, manufactured by Alps Electric Co., Ltd.) under conditions of application voltage 12.0 V (thermal head resistance value 4412 Ω), pulse width 6.8 msec, printing cycle 8 msec, and dot density 12 dots/line to evaluate the releasability of the resin layer (receptive layer) from the thermal transfer sheet.

The releasability was visually evaluated according to the following criteria.
○: The thermal transfer sheet was separated from the resin layer (receptive layer) without any trouble.
× : The thermal transfer sheet could not be separated from and was stuck to the resin layer (receptive layer).

### (Peeling noise)

A thermal transfer sheet (manufactured by Dai Nippon Printing Co., Ltd.), wherein three color transfer layers for yellow, magenta, and cyan as dye layers had been provided in a face serial manner, and each of the intermediate transfer recording media prepared in the above examples and comparative examples were put on top of each other so that the color transfer layer faced the receptive layer. Recording was then carried out by a thermal head of a thermal transfer printer from the backside of the thermal transfer sheet under conditions of application voltage 12.0 V, pulse width 16 msec, printing cycle 33.3 msec, and dot density 6 dots/line. Thereafter, a vinyl chloride card was put on top of the intermediate transfer recording medium so that the vinyl chloride card faced the image recorded face, followed by the transfer of the transparent sheet provided with the receptive layer onto the card from the backside of the intermediate transfer recording medium under conditions of temperature 130°C, speed 1 m/min, and pressure 3 kg/line to examine the peeling noise generated at the time of the separation of the transparent sheet from the substrate sheet. For the intermediate transfer recording medium prepared in Example B1-1, the above procedure was repeated, except that the thermal ink-type thermal transfer sheet was used to perform recording under printing conditions as used in the evaluation of the releasability.

In the evaluation of the peeling noise, whether or not noise was generated was examined through hearing by an evaluator.
O: The transparent sheet could be smoothly separated from the substrate sheet without causing peeling noise.
× : At the time of the separation of the transparent sheet from the substrate sheet, harsh grating peeling noise occurred. (Overall evaluation)

The properties of the intermediate transfer recording media were evaluated overall based on the results of evaluations of peel force, peel force after storage, releasability, and peeling noise.

The criteria for the overall evaluation were as follows.
○ : The peel force was 0.004 N/cm to 0.5 N/cm (0.01 to 0.5 N/inch), the peel force after the storage was reduced or increased by not more than about 10% as compared with the peel force before the storage, and the results of evaluations of releasability and peeling noise were good.
× : The releasability was poor, the peeling noise occurred, the peel force was outside the range of 0.004 N/cm to 0.5 N/cm (0.01 to 0.5 N/inch), or the peel force after storage was increased or reduced by not less than 20% as compared with the peel force before storage, that is, was poor.

The results of evaluations are shown in the following table.

**Table B1**

| | Peel force, N/inch * | Peel force after storage, N/inch * | Releasability | Peeling noise | Overall evaluation |
|---|---|---|---|---|---|
| Ex. B1 | 0.05 | 0.05 | ○ | ○ | ○ |
| Ex. B1-1 | 0.05 | 0.05 | ○ | ○ | ○ |
| Ex. B2 | 0.25 | 0.25 | ○ | ○ | ○ |
| Ex. B3 | 0.10 | 0.09 | ○ | ○ | ○ |
| Ex. B4 | 0.18 | 0.20 | ○ | ○ | ○ |
| Ex. B5 | 0.04 | 0.04 | ○ | ○ | |
| Comp.Ex. B1 | 0.18 | 0.36 | × | × | x |
| Comp.Ex. B2 | 0.47 | 2.31 | × | × | x |
| Comp.Ex. B3 | 0.35 | 1.13 | × | × | x |
| Comp.Ex. B4 | 0.10 | 0.55 | × | × | × |
| Comp.Ex. B5 | 1.80 | 1.85 | × | ○^{*1} | × |

| | | | | | |
|---|---|---|---|---|---|
| *1: Although peeling noise did not occur, crease took place in the transparent sheet on the object. *1[N/inch] = 0.39 [N/cm] | | | | | |

As described above, in the intermediate transfer recording medium comprising: a sheet substrate provided with a resin layer; and a transparent sheet provided with a receptive layer, the transparent sheet provided with the receptive layer having been put on top of the sheet substrate provided with the resin layer so that the resin layer faces the transparent sheet on its side remote from the receptive layer, the resin layer being separable from the transparent sheet to transfer the transparent sheet provided with the receptive layer onto an object, the use of a hydrosilylation-type silicone pressure-sensitive adhesive in the resin layer can complete the curing reaction of the resin layer at a low temperature in a short time and can eliminate the change in peel force between the resin layer and the transparent sheet with the elapse of time.

Further, since the hydrosilylation-type silicone pressure-sensitive adhesive is used, the peel force between the resin layer and the transparent sheet is not greatly influenced by heating (100 to 200°C) at the time of transfer of the transparent sheet provided with the receptive layer onto an object.

In forming an image on the intermediate transfer recording medium, even when the resin layer has come into contact with the thermal transfer sheet due to the movement of the image forming position, there is no fear of the resin being fused to the thermal transfer sheet. That is, good releasability from the thermal transfer sheet can be realized.

Further, in the intermediate transfer recording medium, the curing reaction of the hydrosilylation-type silicone pressure-sensitive adhesive used in the resin layer can be completed at a low temperature in a short time, and, thus, the productivity of the intermediate transfer recording medium can be enhanced.

When the intermediate transfer recording medium is used, the transparent sheet covers the surface of the image formed portion in the object and can function as an even firm protective layer. Thus, fastness properties can be fully imparted to the image.

### Example C1 (Reference Example)

The following coating liquid for a hologram layer was first coated on a 25 µm-thick polyethylene terephthalate film (Lumirror, manufactured by Toray Industries, Inc.) as a transparent sheet, and the coating was dried to form a hologram layer at a coverage of 2.0 g/m² on a dry basis. A hologram pattern was formed in the hologram layer by forming fine concaves and convexes by embossing using an original plate having a concave-convex pattern of interference fringes of a hologram.

| (Coating liquid for hologram layer) | |
|---|---|
| Acrylic resin | 40 parts |
| Melamine resin | 10 parts |
| Cyclohexane | 50 parts |
| Methyl ethyl ketone | 50 parts |

Further, a 50 mm (500 angstrom) -thick titanium oxide layer was formed as a transparent deposit by vacuum deposition on the hologram layer with the hologram pattern formed thereon. Thus, a hologram formation layer composed of the hologram layer and the transparent deposit was formed. The following coating liquid for a receptive layer was coated on the hologram formation layer, and the coating was dried to form a receptive layer at a coverage of 3.0 g/m² on a dry basis.

| (Coating liquid for receptive layer) | |
|---|---|
| Vinyl chloride-vinyl acetate copolymer | 40 parts |
| Acrylic silicone | 1.5 parts |
| Methyl ethyl ketone | 50 parts |
| Toluene | 50 parts |

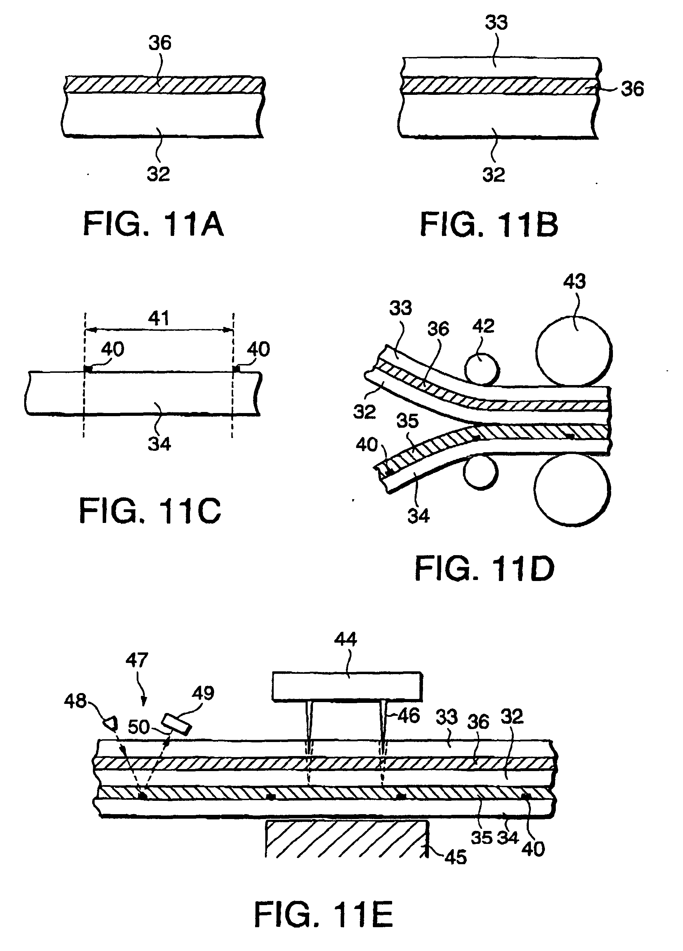

Next, a 38 µm-thick polyethylene terephthalate film (Lumirror, manufactured by Toray Industries, Inc.) was provided as a sheet substrate. Register marks were formed on the sheet substrate at its positions as shown in Fig. 11 by gravure printing a register mark ink having the following composition at a coverage of 3 g/m² on a dry basis.

| (Register mark ink) | |
|---|---|
| Carbon black | 8.0 parts |
| Urethane resin (HMS-20, manufactured by Nippon Polyurethane Industry Co., | |
| Ltd.) | 5.0 parts |
| Methyl ethyl ketone | 38.5 parts |
| Toluene | 38.5 parts |

The transparent sheet provided with the hologram formation layer and the receptive layer was then dry laminated onto the sheet substrate provided with the register marks so that the transparent sheet on its side remote from the receptive layer faced the sheet substrate on its side having the register marks through a resin layer having the following composition (coverage 3 g/m² on a dry basis) (see Fig. 11D) . Further, in the laminate thus obtained, as shown in Fig. 11D, the transparent sheet 32 portion including the receptive layer 33 was subjected to half cutting 37 by pressing an upper die 44 provided with a cutter blade 46 and a pedestal 45 against the transparent sheet 32 portion including the receptive layer 33. Thus, a continuously wound intermediate transfer recording medium of Example C1 was prepared. The resin layer was separable from the transparent sheet.

| (Coating liquid for resin layer) (Easy-adhesion adhesive layer type) | |
|---|---|
| Acrylic resin latex (LX 874, manufactured by Nippon Zeon Co.) | 30 parts |
| Water | 35 parts |
| Isopropyl alcohol | 35 parts |

### Example C2 (Reference Example)

A hologram formation layer and a receptive layer were provided on a transparent sheet in the same manner as in Example C1. Separately, a 38 µm-thick polyethylene terephthalate film (Lumirror, manufactured by Toray Industries, Inc.) was provided as a sheet substrate. A resin of low density polyethylene (LDPE) with 15% of titanium oxide being dispersed therein was extrusion coated on the sheet substrate to a thickness of 40 µm. Simultaneously with the extrusion, the transparent sheet with the receptive layer formed thereon was EC laminated onto the sheet substrate with the resin layer formed thereon so that the transparent sheet on its side remote from the receptive layer faced the LDPE layer provided on the sheet substrate. In this case, however, as shown in Fig. 11D, register marks were previously printed by the register mark ink as used in Example C1 in the same manner as in Example C1 on the sheet substrate in its side where the LDPE layer was to be formed.

Further, in the laminate thus obtained, as shown in Fig. 11, the transparent sheet portion including the receptive layer was half cut by pressing an upper die provided with a cutter blade and a pedestal against the transparent sheet portion including the receptive layer. In addition, the whole portion except for the image forming portion was separated using the half cut as the boundary between the removal portion and the image forming portion remaining unremoved. Thus, a continuously wound intermediate transfer recording medium of Example C2 was prepared. This intermediate transfer recording medium was separable in its portion between the resin layer and the transparent sheet.

### Comparative Example C1

A peel layer having the following composition was formed on a 25 µm-thick polyethylene terephthalate film (Lumirror, manufactured by Toray Industries, Inc.) at a coverage of 1 g/m² on a dry basis. The coating liquid for a receptive layer used in Example C1 was coated onto the peel layer to form a receptive layer at a coverage of 3 g/m² on a dry basis. Further, an adhesive layer having the following composition 1 was formed on the receptive layer at a coverage of 3 g/m² on a dry basis. Thus, a receptive layer transfer sheet was prepared. Separately, the coating liquid for a peel layer used in the preparation of the receptive layer transfer sheet was coated on a 25 µm-thick polyethylene terephthalate film (Lumirror, manufactured by Toray Industries, Inc.) to form a peel layer at a coverage of 1 g/m² on a dry basis. A protective layer having the following composition was formed on the peel layer at a coverage of 3 g/m² on a dry basis. An adhesive layer having the following composition 2 was then formed on the protective layer at a coverage of 3 g/m² on a dry basis. Thus, a protective layer transfer sheet was provided.

| [Composition of coating liquid for peel layer] | |
|---|---|
| Polyvinyl alcohol resin (AH-17, manufactured by Nippon Synthetic | |
| Chemical Industry Co., Ltd.) | 100 parts |
| Water | 400 parts |

| [Composition of coating liquid 1 for adhesive layer] | |
|---|---|
| Polymethyl methacrylate resin (BR-106, manufactured by Mitsubishi Rayon Co., Ltd.) | 100 parts |
| Foaming agent (F-50, manufactured by | |
| Matsumoto Yushi Seiyaku Co., Ltd.) | 15 parts |
| Titanium oxide (TCA-888, manufactured by Tohchem Products Corporation) | 100 parts |
| Methyl ethyl ketone/toluene (mass ratio = 1/1) | 300 parts |

| [Composition of coating liquid for protective layer] | |
|---|---|
| Vinyl chloride-vinyl acetate copolymer (VYHD, manufactured by Union Carbide Corporation) | 100 parts |
| Methyl ethyl ketone/toluene (mass ratio = 1/1) | 400 parts |

| [Composition of coating liquid 2 for adhesive layer] | |
|---|---|
| Acrylic resin (BR-106, manufactured by Mitsubishi Rayon Co., Ltd.) | 100 parts |
| Methyl ethyl ketone/toluene (mass ratio = 1/1) | 300 parts |

An image was formed on the receptive layer in the samples provided in the examples and the comparative examples under the following conditions. For the sample provided in Comparative Example C1, a protective layer was further stacked on the image-receptive layer. A thermal transfer sheet (manufactured by Dai Nippon Printing Co., Ltd.), wherein three color transfer layers for yellow, magenta, and cyan as dye layers had been provided in a face serial manner, and each of the intermediate transfer recording media provided in the respective examples were put on top of each other so that each color transfer layer faced the receptive layer. Recording was then carried out by a thermal head of a thermal transfer printer from the backside of the thermal transfer sheet under conditions of head application voltage 12.0 V, pulse width 16 msec, printing cycle 33.3 msec, and dot density 6 dots/line. Thus, a full-color photograph-like image (a mirror image) of a face was formed on the receptive layer in the intermediate transfer recording medium.

Next, the intermediate transfer recording medium was put on top of a 600 µm-thick white PET-G sheet (Diafix PG-W, PET-G, manufactured by Mitsubishi Plastic Industries Ltd.) as an object so that the receptive layer with the image formed thereon faced the PET-G sheet. A thermal head and a platen roll were pressed against the assembly, and energy was applied to the image formed portion under conditions of 160 mJ/mm² and printing speed 33.3 msec/line (feed pitch 6 lines/mm) to adhere the image-receptive layer to the object. The sheet substrate was then separated. Thus, only the image formed portion could be re-transferred onto the object to form an image on the object. Further, for the sample of Example C1, at the time of the re-transfer, the transparent sheet portion was cut in such a state that the half cut served as the boundary between the removal portion and the portion remaining unremoved. As a result, the transparent sheet covered the surface of the image formed portion and thus functioned as an even firm protective layer, whereby fastness properties could be fully imparted to the image. Further, since the transparent sheet portion could be tidily cut at the half cut portion, the protective layer could be simply transferred onto the image with high accuracy. For the sample of Example C2, since the whole portion except for the image formed portion was previously separated using the half cut as the boundary between the removal portion and the portion remaining unremoved, at the time of the re-transfer, the transparent sheet portion was not cut and covered the surface of the image formed portion and thus functioned as an even firm protective layer, whereby fastness properties could be fully imparted to the image. Further, the protective layer could be transferred onto the image with better accuracy in a simpler manner.

The prints (re-transferred prints) prepared in Example C1 and Example C2 have a hologram image so as to cover the thermally transferred image. Therefore, alteration and forgery can be fully prevented.

In the sample provided in Comparative Example C1, the same white PET-G sheet as used in the examples was put as an object on top of the receptive layer transfer sheet, and the receptive layer was transferred onto the PET-G sheet by means of a thermal head. Next, the thermal transfer sheet as used in the recording of the intermediate transfer recording medium was put on top of the surface of the receptive layer, and a full-color photograph-like image (mirror image) of a face was formed on the receptive layer by means of a thermal head under conditions of head application voltage 12.0 V, pulse width 16 msec, printing cycles 33.3 msec, and dot density 6 dots/line. Further, a protective layer was transferred from the protective layer transfer sheet onto the image forming portion through the application of energy by means of the thermal head. Thus, an image was formed on the object. Next, the samples prepared in the examples and the comparative example were tested for Taber abrasion under conditions of CS-10 as a truck wheel, load on image 500 g, and 1400 cycles. In this case, the samples were visually inspected for disappearance of image. As a result, for both the samples of Example C1 and C2, the image did not disappear, whereas, for the sample of Comparative Example C1, the image disappeared.

As described above, the process for producing an intermediate transfer recording medium comprising a sheet substrate provided with a resin layer and a transparent sheet provided with a receptive layer, the transparent sheet provided with the receptive layer having been put on top of the sheet substrate provided with the resin layer so that the resin layer faces the transparent sheet on its side remote from the receptive layer, the transparent sheet portion including the receptive layer having been half cut, a hologram formation layer being stacked on the transparent sheet, the resin layer being separable from the transparent sheet, comprises the steps of: providing an original sheet comprising a hologram formation layer stacked on a transparent sheet; forming a receptive layer by coating on the original sheet; applying the transparent sheet on its side remote from the receptive layer onto a sheet substrate, in which register marks have been previously provided at respective positions for one screen unit, through a resin layer; and then reading the register marks to perform registration for half cutting and then to perform half cutting.

Thermally transferred images formed using the intermediate transfer recording medium thus obtained have various excellent fastness properties even under severe service conditions, and, by virtue of the adoption of half cutting, the protective layer (transparent sheet) can be transferred onto the image with high accuracy in a simple manner. Further, since a hologram image is provided on the transparent sheet, the alteration and forgery of the object with a thermal transferred image provided thereon can be fully prevented. Example D1 (Reference Example)

The following coating liquid for a receptive layer was first coated on a 25 µm-thick polyethylene terephthalate film (Lumirror, manufactured by Toray Industries, Inc.) as a transparent sheet, and the coating was dried to form a receptive layer at a coverage of 3.0 g/m² on a dry basis.

| (Coating liquid for receptive layer) | |
|---|---|
| Vinyl chloride-vinyl acetate copolymer | 40 parts |
| Acrylic silicone | 1.5 parts |
| Methyl ethyl ketone | 50 parts |
| Toluene | 50 parts |

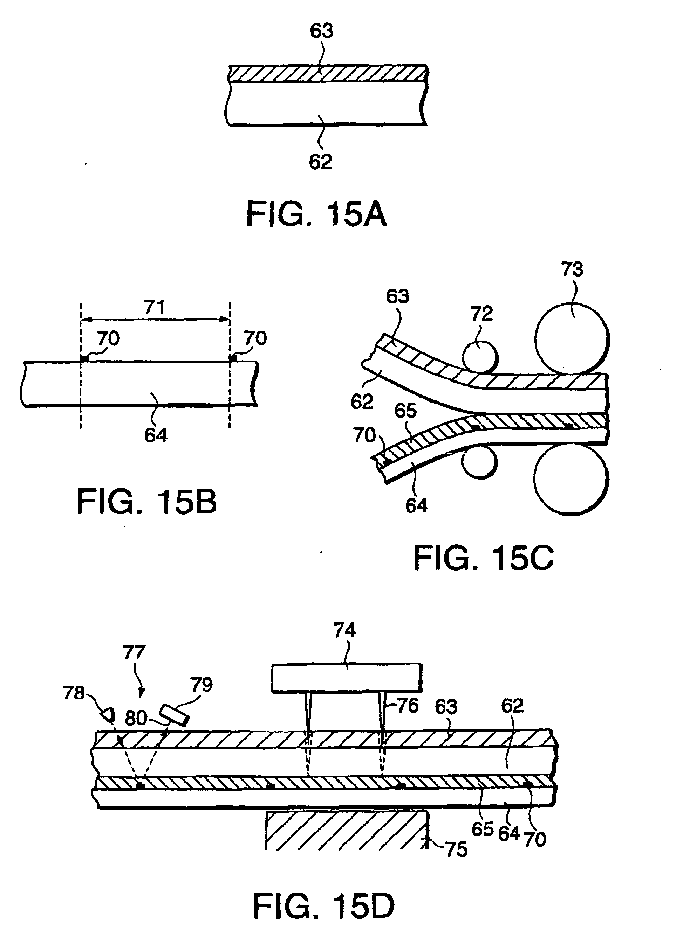

Next, a 38 µm-thick polyethylene terephthalate film (Lumirror, manufactured by Toray Industries, Inc.) was provided as a sheet substrate. Register marks were formed on the sheet substrate at its positions as shown in Fig. 15 by gravure printing a register mark ink having the following composition at a coverage of 3 g/m² on a dry basis.

| (Register mark ink) | |
|---|---|
| Carbon black | 8.0 parts |
| Urethane resin (HMS-20, manufactured by Nippon Polyurethane Industry Co., Ltd.) | 5.0 parts |
| Methyl ethyl ketone | 38.5 parts |
| Toluene | 38.5 parts |

The transparent sheet provided with the receptive layer was then dry laminated onto the sheet substrate provided with the register marks so that the transparent sheet on its side remote from the receptive layer faced the sheet substrate on its side having the register marks through a resin layer having the following composition (coverage 3 g/m² on a dry basis) (see Fig. 15C). Further, in the laminate thus obtained, as shown in Fig. 15D, the transparent sheet 62 portion including the receptive layer 63 was subjected to half cutting 67 by pressing an upper die 74 provided with a cutter blade 76 and a pedestal 75 against the transparent sheet 62 portion including the receptive layer 63. Thus, a continuously wound intermediate transfer recording medium of Example D1 was prepared. The resin layer was separable from the transparent sheet.

| (Coating liquid for resin layer) (Easy-adhesion adhesive layer type) | |
|---|---|
| Acrylic resin latex (LX 874, manufactured by Nippon Zeon Co.) | 30 parts |
| Water | 35 parts |
| Isopropyl alcohol | 35 parts |

### Example D2 (Reference Example)

A receptive layer were provided on a transparent sheet in the same manner as in Example D1. Separately, a 38 µm-thick polyethylene terephthalate film (Lumirror, manufactured by Toray Industries, Inc.) was provided as a sheet substrate. A resin of low density polyethylene (LDPE) with 15% of titanium oxide being dispersed therein was extrusion coated on the sheet substrate to a thickness of 40 µm. Simultaneously with the extrusion, the transparent sheet with the receptive layer formed thereon was EC laminated onto the sheet substrate with the resin layer formed thereon so that the transparent sheet on its side remote from the receptive layer faced the LDPE layer provided on the sheet substrate. In this case, however, as shown in Fig. 15C, register marks were previously printed by the register mark ink as used in Example D1 in the same manner as Example D1 on the sheet substrate in its side where the LDPE layer was to be formed.

Further, in the laminate thus obtained, as shown in Fig. 15, the transparent sheet portion including the receptive layer was half cut by pressing an upper die, provided with a cutter blade, and a pedestal against the transparent sheet portion including the receptive layer. In addition, the whole portion except for the patch portion including the image forming portion was separated using the half cut as the boundary between the removal portion and the image forming portion remaining unremoved. Thus, a continuously wound intermediate transfer recording medium of Example D2 was prepared. This intermediate transfer recording medium was separable in its portion between the resin layer and the transparent sheet.

### Comparative Example D1

A peel layer having the following composition was formed on a 25 gm-thick polyethylene terephthalate film (Lumirror, manufactured by Toray Industries, Inc.) at a coverage of 1 g/m² on a dry basis. The coating liquid for a receptive layer used in Example D1 was coated onto the peel layer to form a receptive layer at a coverage of 3 g/m² on a dry basis. Further, an adhesive layer having the following composition 1 was formed on the receptive layer at a coverage of 3 g/m² on a dry basis. Thus, a receptive layer transfer sheet was prepared. Separately, the coating liquid for a peel layer used in the preparation of the receptive layer transfer sheet was coated on a 25 µm-thick polyethylene terephthalate film (Lumirror, manufactured by Toray Industries, Inc.) to form a peel layer at a coverage of 1 g/m² on a dry basis. A protective layer having the following composition was formed on the peel layer at a coverage of 3 g/m² on a dry basis. An adhesive layer having the following composition 2 was then formed on the protective layer at a coverage of 3 g/m² on a dry basis. Thus, a protective layer transfer sheet was prepared.

| [Composition of coating liquid for peel layer] | |
|---|---|
| Polyvinyl alcohol resin (AH-17, manufactured by Nippon Synthetic | |
| Chemical Industry Co., Ltd.) | 100 parts |
| Water | 400 parts |

| | |
|---|---|
| [Composition of coating liquid 1 for adhesive layer] | |
| Polymethyl methacrylate resin (BR-106, manufactured by Mitsubishi Rayon Co., Ltd.) | 100 parts |
| Foaming agent (F-50, manufactured by Matsumoto Yushi Seiyaku Co., Ltd.) | 15 parts |
| Titanium oxide (TCA-888, manufactured by Tohchem Products Corporation) | 100 parts |
| Methyl ethyl ketone/toluene (mass ratio = 1/1) | 300 parts |

| | |
|---|---|
| [Composition of coating liquid for protective layer] | |
| Vinyl chloride-vinyl acetate copolymer (VYHD, manufactured by Union Carbide Corporation) | 100 parts |
| Methyl ethyl ketone/toluene (mass ratio = 1/1) | 400 parts |

| [Composition of coating liquid 2 for adhesive layer] | |
|---|---|
| Acrylic resin (BR-106, manufactured by Mitsubishi Rayon Co., Ltd.) | 100 parts |
| Methyl ethyl ketone/toluene (mass ratio = 1/1) | 300 parts |

An image was formed on the receptive layer in the samples provided in the examples and the comparative examples under the following conditions. For the sample provided in Comparative Example D1, a protective layer was further stacked on the image-receptive layer. A thermal transfer sheet (manufactured by Dai Nippon Printing Co., Ltd.), wherein three color transfer layers for yellow, magenta, and cyan as dye layers had been provided in a face serial manner, and each of the intermediate transfer recording media provided in the respective examples were put on top of each other so that each color transfer layer faced the receptive layer. Recording was then carried out by a thermal head of a thermal transfer printer from the backside of the thermal transfer sheet under conditions of head application voltage 12.0 V, pulse width 16 msec, printing cycle 33.3 msec, and dot density 6 dots/line. Thus, a full-color photograph-like image (a mirror image) of a face was formed on the receptive layer in the intermediate transfer recording medium.

Next, the intermediate transfer recording medium was put on top of a 600 µm-thick white PET-G sheet (Diafix PG-W, PET-G, manufactured by Mitsubishi Plastic Industries Ltd.) as an object so that the receptive layer with the image formed thereon faced the PET-G sheet. A thermal head and a platen roll were pressed against the assembly, and energy was applied to the image formed portion under conditions of 160 mJ/mm² and printing speed 33.3 msec/line (feed pitch 6 lines/mm) to adhere the image-receptive layer to the object. The sheet substrate was then separated. Thus, only the image formed portion could be re-transferred onto the object to form an image on the object. Further, for the sample of Example D1, at the time of the re-transfer, the transparent sheet portion was cut in such a state that the half cut served as the boundary between the removal portion and the portion remaining unremoved. As a result, the transparent sheet covered the surface of the image formed portion and thus functioned as an even firm protective layer, whereby fastness properties could be fully imparted to the image. Further, since the transparent sheet portion could be tidily cut at the half cut portion, the protective layer could be simply transferred onto the image with high accuracy. For the sample of Example D2, since the whole portion except for the image formed portion was previously separated using the half cut as the boundary between the removal portion and the portion remaining unremoved, at the time of the re-transfer, the transparent sheet portion was not cut and covered the surface of the image formed portion and thus functioned as an even firm protective layer, whereby fastness properties could be fully imparted to the image. Further, the protective layer could be transferred onto the image with better accuracy in a simpler manner.

The peel force for separating the transparent sheet portion provided with the receptive layer from the sheet substrate provided with the resin layer in re-transferring only the image formed portion onto the object after the formation of an image in the receptive layer of the intermediate transfer recording media, provided in Examples D1 and D2, in the same manner as described above was measured by the 180-degree peel method according to JIS Z 0237. As a result, for the sample of Example D1, the peel force was 4.5 gf/inch (44.1 mN/inch) as measured at 290°C (LDPE), and, for the sample of Example D2, the peel force was 0.015 N/cm (4.0 gf/ inch (38.2 mN/inch)) as measured at 320°C (MDPE).

In the sample provided in Comparative Example D1, the same white PET-G sheet as used in the examples was put as an object on top of the receptive layer transfer sheet, and the receptive layer was transferred onto the PET-G sheet by means of a thermal head. Next, the thermal transfer sheet as used in the recording of the intermediate transfer recording medium was put on top of the surface of the receptive layer, and a full-color photograph-like image (mirror image) of a face was formed on the receptive layer by means of a thermal head under conditions of head application voltage 12.0 V, pulse width 16 msec, printing cycles 33.3 msec, and dot density 6 dots/line. Further, a protective layer was transferred from the protective layer transfer sheet onto the image forming portion through the application of energy by means of the thermal head. Thus, an image was formed on the object. In the sample prepared in Comparative Example D1, for the print with the protective layer transferred thereon, the protective layer was a thin layer having a thickness of several µm, and, thus, the thermally transferred image had unsatisfactory fastness properties. Further, in the sample of Comparative Example D1, since the receptive layer with the image formed thereon had not been half cut, in re-transferring the receptive layer onto the object, the edge was not clearly separated, and a failure of the receptive layer to be transferred occurred.

As described above, in an intermediate transfer recording medium comprising: a sheet substrate provided with a resin layer; and a transparent sheet provided with a receptive layer, the transparent sheet provided with the receptive layer having been put on top of the sheet substrate provided with the resin layer so that the resin layer faces the transparent sheet on its side remote from the receptive layer, the transparent sheet portion including the receptive layer having been half cut, the resin layer being separable from the transparent sheet, the peel force necessary for separating the transparent sheet portion from the sheet substrate provided with the resin layer at the time of the transfer of the transparent sheet portion including the receptive layer onto an object is in the range of 0.019 N/cm to 0.38 N/cm (5 to 100 gf/inch) as measured by the 180-degree peel method according to JIS Z 0237. Thermally transferred images formed using this intermediate transfer recording medium had various excellent fastness properties even under severe service conditions, and, by virtue of the adoption of half cutting, the protective layer (transparent sheet) could be transferred onto the image with high accuracy in a simple manner. Further, the regulation of the peel force, for separating the transparent sheet portion from the sheet substrate provided with the resin layer, in the above-defined range could prevent a failure of the transparent sheet portion to be transferred and permitted the transparent sheet portion to be simply transferred onto the object.

### Example E1 (Reference Example)

A coating liquid having the following composition for a receptive layer was coated onto a 25 µm-thick polyethylene terephthalate film (PET) (Lumirror, manufactured by Toray Industries, Inc.) as a transparent sheet, and the coating was dried to form a receptive layer having a thickness of 4 µm on a dry basis. The transparent sheet with the receptive layer formed thereon was then applied to a 2 5 µm-thick PET film (Lumirror, manufactured by Toray Industries, Inc.) as a support film through a 20 µm-thick layer of low density polyethylene (Mirason 16 P, density 0.923 g/cm³, lower side temperature of die 295°C, manufactured by Mitsui Petrochemical Industries, Ltd.) by extrusion lamination to prepare an intermediate transfer medium. In this case, the support film used was such that the support film on its side, where the low density polyethylene was to be stacked, had been subjected to corona treatment. Further, the extrusion lamination was carried out in such a manner that the untreated (uncoated) surface of the PET film as the transparent sheet remote from the receptive layer came into contact with the low density polyethylene.

### Comparative Example E1

An intermediate transfer medium was prepared in the same manner as in Example E1, except that the lower side temperature of the die at the time of extrusion lamination changed to 305°C.

### Comparative Example E2

An intermediate transfer medium was prepared in the same manner as in Example E1, except that the lower side temperature of the die at the time of extrusion lamination changed to 330°C.

### Comparative Example E3

An intermediate transfer medium was prepared in the same manner as in Example E1, except that the resin to be extrusion laminated was changed to polypropylene (F 329 RA, manufactured by Grand Polymer Co., Ltd., lower side temperature of die 290°C). Example E2 (Reference Example)

An intermediate transfer medium was prepared in the same manner as in Example E1, except that the resin to be extrusion laminated was changed to medium density polyethylene (Sumikathene L 5721, density 0.937 g/cm³, lower side temperature of die 320°C, manufactured by Sumitomo Chemical Co., Ltd.).

### Example E3 (Reference Example)

A coating liquid having the following composition for a receptive layer was coated onto a 25 µm-thick polyethylene terephthalate film (PET) (Lumirror, manufactured by Toray Industries, Inc.) as a transparent sheet, and the coating was dried to form a receptive layer having a thickness of 4 µm on a dry basis. A first resin layer formed of an acrylic resin was stacked in a thickness of 1 µm on a dry basis onto the transparent sheet in its side remote from the receptive layer. Further, a urethane adhesive (Takelac A-969 V/Takenate A-5 (manufactured by Takeda Chemical Industries, Ltd.) = 3/1) was stacked thereon to a thickness of 2.5 µm on a dry basis, and, in addition, a 25 µm-thick PET film (Lumirror, manufactured by Toray Industries, Inc.) as a substrate film was dry laminated thereto to prepare an intermediate transfer medium.

### Example E4 (Reference Example)

A coating liquid having the following composition for a receptive layer was coated onto a 25 µm-thick polyethylene terephthalate film (PET) (Lumirror, manufactured by Toray Industries, Inc.) as a transparent sheet, and the coating was dried to form a receptive layer having a thickness of 4 µm on a dry basis. A first resin layer formed of an acrylic resin was stacked in a thickness of 1 µm on a dry basis onto the transparent sheet in its side remote from the receptive layer. Further, a second resin layer formed of an ethylene-vinyl acetate copolymer resin was stacked thereon in a thickness of 1 µm on a dry basis. The laminate was then applied to a 25 µm-thick PET film (Lumirror, manufactured by Toray Industries, Inc.) as a support film through a 20 µm-thick layer of low density polyethylene (Mirason 16 P, density 0.923 g/cm³, lower side temperature of die 330°C, manufactured by Mitsui Petrochemical Industries, Ltd.) by extrusion lamination to prepare an intermediate transfer medium.

### Comparative Example E5

A coating liquid having the following composition for a receptive layer was coated onto a 25 µm-thick polyethylene terephthalate film (PET) (Lumirror, manufactured by Toray Industries, Inc.) as a transparent sheet, and the coating was dried to form a receptive layer having a thickness of 4 µm on a dry basis. Separately, a 25 µm-thick PET film (Lumirror, manufactured by Toray Industries, Inc.) was provided as support film, and a resin layer was provided on the support film to a thickness of 3 µm on a dry basis. The transparent sheet with the receptive layer formed thereon was dry laminated onto the support film with the resin layer provided thereon so that the surface of the transparent sheet remote from the receptive layer faced the resin layer. Thus, an intermediate transfer medium was prepared.

| [Composition of coating liquid for receptive layer] | |
|---|---|
| Vinyl chloride-vinyl acetate copolymer (VYHD, manufactured by Union Carbide Corporation) | 100 parts |
| Epoxy-modified silicone (KF-393, manufactured by The Shin-Etsu Chemical Co., Ltd.) | 8 parts |
| Amino-modified silicone (KS-343, | |
| manufactured by The Shin-Etsu Chemical Co., Ltd.) | 8 parts |
| Methyl ethyl ketone/toluene (mass ratio = 1/1) | 400 parts |

For the intermediate transfer media thus prepared, the image non-forming portion was half cut and was removed, followed by continuous winding. The samples thus obtained were evaluated for releasability and blocking. The results are shown in Table E1 below.

**Table E1**

| | Transparent sheet | 1st resin layer | 2nd resin layer | 3rd resin layer | Support film | Releasability | Blocking |
|---|---|---|---|---|---|---|---|
| Ex. 1 | 25 µm PET (un-treated surface) | LDPE 290°C | - | - | 25 µm PET (co-rona treatment) | 3 | ○ |
| EX. 2 | ↑ | MDPE 320°C | - | - | ↑ | 3 | ○ |
| Comp.Ex. 1 | ↑ | LDPE 305°C | - | - | ↑ | 5 | ○ |
| Comp.Ex. 2 | ↑ | LDPE 330°C | - | - | ↑ | 5 | ○ |
| Comp.Ex. 3 | ↑ | PP 290°C | - | - | ↑ | 1 | ○ |
| Ex. 3 | ↑ | Acryl + PEs | Urethane resin | - | ↑ | 3 | ○ |
| Ex. 4 | ↑ | ↑ | Ethylene-vinyl acetate | LDPE 330°C | ↑ | 3 | |
| Comp.Ex. 4 | ↑ | NBR | - | - | ↑ | 4 | × |

| | | | | | | | |
|---|---|---|---|---|---|---|---|
| Releasability: The releasability of the transparent sheet from the first resin layer provided on the support sheet was evaluated. 5 ..... heavy, 3 ..... moderate, and 1 ..... light. Blocking: After the image non-forming portion was removed, the intermediate transfer medium was rolled. The roll was then allowed to stand under conditions of 40°C and free for 48 hr, and sticking between the first resin layer and the backside of the support sheet was then evaluated. | | | | | | | |

The adoption of the construction of the invention can simultaneously realize a property such that blocking does not occur upon winding in a roll form of the intermediate transfer medium with the image non-forming portion removed therefrom and a property such that, at the time of unwinding, the releasability of the transparent sheet from the resin layer provided on the support sheet is good.

## Claims

1. An intermediate transfer recording medium comprising: a sheet substrate provided with a resin layer; and a transparent sheet provided with a receptive layer, said transparent sheet provided with the receptive layer having been put on top of the sheet substrate provided with the resin layer so that the resin layer faces the transparent sheet on its side remote from the receptive layer, the resin layer being separable from the transparent sheet to transfer the transparent sheet provided with a receptive layer onto an object, the resin layer being formed of a polyethylene resin stacked on the sheet substrate by extrusion coating, wherein the lower side temperature of a die at the time of extrusion of the polyethylene is 295°C or below, wherein the resin layer has a two-layer structure of a first resin layer and a second resin layer provided in that order from the transparent sheet side and the first resin layer is composed mainly of an acrylic resin.

2. The intermediate transfer recording medium according to claim 1, wherein the polyethylene resin is low density polyethylene.

3. The intermediate transfer recording medium according to claim 1, wherein the polyethylene resin is medium density polyethylene.

4. The intermediate transfer recording medium according to claim 1, wherein the second resin layer is an adhesive layer.

5. The intermediate transfer recording medium according to claim 1, wherein the resin layer has a three-layer structure of a first resin layer, a second resin layer, and a third resin layer provided in that order.

6. The intermediate transfer recording medium according to claim 1, wherein the transparent sheet including the receptive layer have been half cut in a specific shape, wherein, after half cutting, the transparent sheet provided with the receptive layer in a predetermined width around the outer periphery of the region to be transferred onto the object has been removed.

7. A printing method comprising the steps of, providing the intermediate transfer recording medium according to claim 6, printing an image in an area larger than a portion which is to be transferred onto the object.

## Patentansprüche

1. Zwischentransferaufzeichnungsmedium, umfassend: ein Blattsubstrat, das mit einer Harzschicht versehen ist, und ein transparentes Blatt, das mit einer Empfangsschicht versehen ist, wobei das transparente Blatt, das mit der Empfangsschicht versehen ist, auf dem Blattsubstrat, das mit der Harzschicht versehen ist, angeordnet wurde, so daß die Harzschicht dem transparenten Blatt an dessen von der Empfangsschicht entfernten Seite zugewandt ist, wobei die Harzschicht von dem transparenten Blatt trennbar ist, um das transparente Blatt, das mit einer Empfangsschicht versehen ist, auf ein Objekt zu übertragen, wobei die Harzschicht aus einem Polyethylenharz gebildet ist, welche auf dem Blattsubstrat durch Extrusionsbeschichten gestapelt ist, wobei die niedrigere Seite-Temperatur einer Form zum Zeitpunkt der Extrusion von Polyethylen 295°C oder weniger beträgt, wobei die Harzschicht eine Zweischichtstruktur aus einer ersten Harzschicht und einer zweiten Harzschicht, die in der Reihenfolge von der Seite des transparenten Blatts bereitgestellt sind, aufweist, und die erste Harzschicht hauptsächlich aus einem Acrylharz aufgebaut ist.

2. Zwischentransferaufzeichnungsmedium nach Anspruch 1, wobei das Polyethylenharz Polyethylen mit niedriger Dichte ist.

3. Zwischentransferaufzeichnungsmedium nach Anspruch 1, wobei das Polyethylenharz Polyethylen mit mittlerer Dichte ist.

4. Zwischentransferaufzeichnungsmedium nach Anspruch 1, wobei die zweite Harzschicht eine Haftschicht ist.

5. Zwischentransferaufzeichnungsmedium nach Anspruch 1, wobei die Harzschicht eine Dreischichtstruktur aus einer ersten Harzschicht, einer zweiten Harzschicht und einer dritten Harzschicht, welche in dieser Reihenfolge bereitgestellt sind, aufweist.

6. Zwischentransferaufzeichnungsmedium nach Anspruch 1, wobei das transparente Blatt, einschließlich der Empfangsschicht, in eine spezifische Form halbgeschnitten sind, wobei das transparente Blatt, das mit der Empfangsschicht versehen ist, in einer vorbestimmten Breite um die äußere Peripherie der auf das Objekt zu übertragenden Region nach dem Halbschneiden entfernt wurde.

7. Druckverfahren, umfassend die Schritte des Bereitstellens des Zwischentransferaufzeichnungsmediums nach Anspruch 6, des Druckens eines Bilds in einem größeren Bereich als dem Anteil, der auf das Objekt zu übertragen ist.

## Revendications

1. Support intermédiaire pour le marquage par transfert comprenant un substrat formant feuille doté d'une couche de résine et une feuille transparente dotée d'une couche réceptrice, ladite feuille transparente dotée de la couche réceptrice ayant été placée au-dessus du substrat formant feuille doté de la couche de résine de manière à ce que la couche de résine soit tournée vers la feuille transparente sur son côté éloigné de la couche réceptrice, la couche de résine pouvant être séparée de la feuille transparente pour transférer la feuille transparente dotée de la couche réceptrice sur un objet, la couche de résine étant formée d'une résine polyéthylène posée sur le substrat formant feuille par enduction par extrusion, dans lequel la température de fond d'une filière au moment de l'extrusion du polyéthylène est de 295 °C ou inférieure, dans lequel la couche de résine présente une structure bicouche constituée d'une première couche de résine et d'une seconde couche de résine dans cet ordre à partir du côté de la feuille transparente et la première couche de résine se compose principalement d'une résine acrylique.

2. Support intermédiaire pour le marquage par transfert selon la revendication 1, dans lequel la résine polyéthylène est constituée de polyéthylène basse densité.

3. Support intermédiaire pour le marquage par transfert selon la revendication 1, dans lequel la résine polyéthylène est constituée de polyéthylène moyenne densité.

4. Support intermédiaire pour le marquage par transfert selon la revendication 1, dans lequel la seconde couche de résine est une couche adhésive.

5. Support intermédiaire pour le marquage par transfert selon la revendication 1, dans lequel la couche de résine présente une structure tricouche constituée d'une première couche de résine, d'une deuxième couche de résine et d'une troisième couche de résine placées dans cet ordre.

6. Support intermédiaire pour le marquage par transfert selon la revendication 1, dans lequel la feuille transparente comprenant la couche réceptrice a été coupée pour moitié selon une forme spécifique, où après avoir effectué la demi-coupe, la feuille transparente dotée de la couche réceptrice d'une largeur prédéterminée sur la périphérie extérieure de la région à transférer sur l'objet a été retirée.

7. Procédé d'impression comprenant les étapes consistant à fournir le support intermédiaire pour le marquage par transfert selon la revendication 6, et à imprimer une image dans une zone plus large qu'une partie qui doit être transférée sur l'objet.
